# EUROPÄISCHE PATENTSCHRIFT

(11) **EP 3 833 935 B1**
(45) Veröffentlichungstag und Bekanntmachung des Hinweises auf die Patenterteilung: **10.08.2022**
(21) Anmeldenummer: 19728666.9
(22) Anmeldetag: 04.06.2019
(51) Int. Cl.: G01D 5/20, G01D 21/00, G01K 1/02, G01K 13/08, G01K 7/00, G01P 3/00, G01K 7/01, G01P 3/44

(54) **SENSORSYSTEM ZUR BESTIMMUNG EINER TEMPERATUR UND MINDESTENS EINER ROTATIONSEIGENSCHAFT EINES UM MINDESTENS EINE ROTATIONSACHSE ROTIERENDEN ELEMENTS**
SENSOR SYSTEM FOR DETERMINING THE TEMPERATURE AND AT LEAST ONE ROTATION CHARACTERISTIC OF AN ELEMENT ROTATING ABOUT AT LEAST ONE AXIS OF ROTATION
SYSTÈME CAPTEUR POUR DÉTERMINER UNE TEMPÉRATURE ET AU MOINS UNE CARACTÉRISTIQUE DE ROTATION D'UN ÉLÉMENT TOURNANT AUTOUR D'AU MOINS UN AXE DE ROTATION

(30) Priorität: 09.08.2018 DE 102018213411
(43) Veröffentlichungstag der Anmeldung: 16.06.2021
(73) Patentinhaber: Robert Bosch GmbH, 70442 Stuttgart (DE)
(72) Erfinder: UTERMOEHLEN, Fabian, 59557 Lippstadt (DE); LEIDICH, Stefan, 71277 Rutesheim (DE)
(86) Internationale Anmeldenummer: PCT/EP2019/064437
(87) Internationale Veröffentlichungsnummer: WO 2020/030325

(56) Entgegenhaltungen:
- EP-A1- 2 853 873
- EP-A1- 3 062 076
- DE-A1-102005 014 984
- DE-A1-102016 102 420

## Beschreibung

### Stand der Technik

Aus dem Stand der Technik sind zahlreiche Sensoren bekannt, welche mindestens eine Rotationseigenschaft rotierender Elemente erfassen. Beispiele derartiger Sensoren sind in Konrad Reif (Hrsg.): Sensoren im Kraftfahrzeug, 2. Auflage, 2012, Seiten 63-74 und 120-129 beschrieben. Beispielsweise kann eine Lage einer Nockenwelle einer Brennkraftmaschine relativ zu einer Kurbelwelle mit einem so genannten Phasengeber mittels eines Hall-Sensors bestimmt werden.

Beispielsweise für eine Realisierung einer Traktion in Elektrofahrzeugen werden häufig entweder Asynchronmaschinen oder Synchronmaschinen verwendet, welche jeweils aus einem ortsfesten Stator und einem sich drehenden Rotor bestehen. Der Stator trägt in der Regel drei, beispielsweise um 120°/p zueinander versetzte Wicklungsstränge, wobei p eine Anzahl von Polpaaren repräsentiert. Bei Asynchronmaschinen besteht der Rotor üblicherweise aus an Enden ringförmig kurzgeschlossenen elektrisch leitfähigen Stäben. Bei einer Drehung eines Rotorfeldes kann so in den Stäben eine Spannung induziert werden, welche einen Stromfluss hervorruft, welcher wiederum ein Gegenmagnetfeld aufbaut und es zu einer rotatorischen Bewegung kommt. Die induzierte Spannung ist Null, wenn sich Rotorfeld und Stator gleich schnell drehen. Es stellt sich eine Drehzahldifferenz ein, welche als Schlupf bezeichnet wird und welche das Moment des Motors definiert. Bei Synchronmaschinen umfasst der Rotor einen Läufer, welcher eine Erregerspule trägt, in welchem ein Gleichstrom fließt und ein statisches Magnetfeld erzeugt. Alternativ dazu kann ein Permanentmagnet als Rotor verwendet werden. Es handelt sich dann um eine permanent erregte Synchronmaschine, welche aufgrund der leistungslosen Erregung einen höheren Wirkungsgrad aufweist und so für Traktionsanwendungen geeigneter sein kann. Eine Drehzahl des Rotors kann prinzipbedingt identisch zur Drehzahl eines Erregerfelds sein. Das Drehmoment kann von einem Phasenversatz, also einer Winkeldifferenz zwischen Statorfeld und Rotor, abhängen. Zur Regelung des Moments, Ansteuerung eines Inverters und entsprechender Bereitstellung von Statorspulensignalen muss für Asynchronmaschinen die Drehzahl des Rotors und für Synchronmaschinen eine Absolutwinkelstellung des Rotors bekannt sein. In beiden Fällen, Synchronmaschinen und Asynchronmaschinen, ist insbesondere aus Gründen der funktionalen Sicherheit zusätzlich die Drehrichtung zu bestimmen. Die maximale Leistung der Maschine kann zudem durch eine Stator- und Rotortemperatur begrenzt sein.

Um die Rotorlage zu ermitteln, ist es bekannt, so genannte Resolver zu verwenden. Bei diesem handelt es sich um einen elektromagnetischen Messumformer, bei dem ein Rotorpaket drehzahlfest auf der Welle des Motors montiert ist. Kreisringförmig umlaufend sind auf einem Stator eine Erregerspule sowie mehrere Empfängerspulen montiert. Die Erregerspule wird mit einem Wechselspannungssignal beaufschlagt und durchsetzt die gesamte Anordnung mit einem elektromagnetischen Wechselfeld. Drehwinkelabhängig kann in einer ersten Empfängerspule eine sinusförmig amplitudenmodulierte Spannung induziert werden, während in einer zweiten Empfängerspule eine cosinusförmig amplitudenmodulierte Spannung induziert wird. Die Bereitstellung des Erregersignals sowie das Auslesen der Signale kann innerhalb der Leistungselektronik bzw. dedizierten Bausteinen innerhalb eines Steuergerätes zur Motorregelung realisiert werden. Resolver benötigen jedoch relativ viel Bauraum, erfordern eine komplexe Signalbereitstellung und -aufbereitung und müssen mit sehr geringen mechanischen Toleranzen montiert werden, um eine ausreichend hohe Genauigkeit zu erreichen. Aus diesen genannten Gründen können Systemkosten entsprechend hoch sein. Weiterhin kann es aus Platzgründen nicht möglich sein, auf den Stator des Resolvers ein redundantes Empfangsspulensystem zu montieren, um eine Verfügbarkeit des Sensors zu erhöhen. So kann ein Ausfall des Sensors zum "Liegenbleiben" des Fahrzeugs führen.

Die Statortemperatur kann aufgrund der begrenzten Temperaturfestigkeit des Isolationslackes der Statorwicklungen bestimmend für die maximale Stromstärke in den Statorspulen, und damit für das abgegebene Drehmoment, sein. Es ist bekannt, zur Bestimmung der Temperatur einen Temperatursensor zu verwenden, welcher in die Statorspulen gewickelt wird. Mittels Modellen kann auf eine Temperaturverteilung geschlossen werden. Die Rotortemperatur, welche vor allem bei Asynchronmaschinen kritisch sein kann, da im Käfigläufer permanent hohe Ströme fließen, wird bisher nicht ermittelt und lediglich über Modelle berechnet. Vor allem die fehlende Messinformation über die Rotortemperatur begrenzt die Performance der elektrischen Maschine und macht eine Modellierung mit entsprechendem Aufwand und Ungenauigkeiten unabdingbar, siehe DE 10 2014 213 103. Im Fall der permanent erregten Synchronmaschine kann eine zu hohe Rotortemperatur zu einer Entmagnetisierung der Permanentmagnete führen. Im Falle der Asynchronmaschine bestimmt die Rotortemperatur die Güte der Drehmomentgenauigkeit.

Weiter bekannt sind Inertialsensoren auf der Basis von Micro Electro Mechanical Systems (MEMS). Mittels beweglich beziehungsweise federnd gelagerter Elemente, welche in Siliziumsubstraten mikrostrukturiert werden können, können mechanische Größen, wie axiale Beschleunigungen oder Drehraten, gemessen werden. Eine Wandlung von Messgrößen in elektrische Signale kann mit einer anwendungsspezifischen integrierten Schaltung (ASIC) erfolgen, welche zur Kompensation von Temperatureffekten einen integrierten Temperatursensor umfassen kann.

Aus der DE 10 2005 014 984 A1 ist ein Sensorystem zur Bestimmung einer Temperartur und Rotationseigenschaft eines rotirenden Elementes mit einem ersten Sensor, einem Temperatursensor und einem induktiven Postionssensor bekannt. Aus der EP 2 853 873 A1 und der EP 3 062 076 A1 sind Vorrichtungen zur Erfassung einer Temperatur und eines Drehwinkels eines Rotors eines Elektromotors bekannt. Ferner ist aus der DE 10 2016 102 420 A1 eine Werkzeugmaschine und Werkzeugmaschineneinheit mit einer Statoreinheit und einer um eine Drehachse drehbaren Rotorwelle bekannt.

### Offenbarung der Erfindung

Die Erfindung wird durch die unabhängigen Ansprüche 1 und 15 definiert.

Im Rahmen der vorliegenden Erfindung wird daher ein Sensorsystem zur Bestimmung einer Temperatur und mindestens einer Rotationseigenschaft eines um mindestens eine Rotationsachse rotierenden Elements vorgeschlagen. Unter einem "Sensor" wird im Rahmen der vorliegenden Erfindung grundsätzlich eine beliebige Vorrichtung verstanden, welche geeignet ist, mindestens eine Messgröße zu erfassen. Unter einem "System" kann eine beliebige Vorrichtung verstanden werden, welche mindestens zwei Komponenten aufweist. Unter einem Sensorsystem zur Bestimmung der Temperatur und der Rotationseigenschaft wird dementsprechend ein Sensorsystem verstanden, welches eingerichtet ist, um die mindestens eine Temperatur und mindestens eine Rotationseigenschaft zu erfassen, beispielsweise zu messen, und welche beispielsweise mindestens ein elektrisches Signal entsprechend der erfassten Eigenschaft erzeugen kann, wie beispielsweise eine Spannung oder einen Strom. Auch Kombinationen von Eigenschaften können erfassbar sein. Unter einer "Rotationseigenschaft" wird im Rahmen der vorliegenden Erfindung grundsätzlich eine Eigenschaft verstanden werden, welche die Rotation des rotierenden Elements zumindest teilweise beschreibt. Hierbei kann es sich beispielsweise um eine Winkelgeschwindigkeit, eine Drehzahl, eine Winkelbeschleunigung, eine Winkelposition oder eine andere Eigenschaft handeln, welche eine kontinuierliche oder diskontinuierliche, gleichförmige oder ungleichförmige Rotation oder Drehung des rotierenden Elements zumindest teilweise charakterisieren kann. Beispielsweise kann es sich bei der Rotationseigenschaft um eine Position, insbesondere eine Winkelposition, eine Drehzahl, eine Winkelbeschleunigung oder um eine Kombination von mindestens zwei dieser Größen handeln. Auch andere Eigenschaften und/oder andere Kombinationen von Eigenschaften können erfassbar sein. Unter einer "Winkelposition" wird im Rahmen der vorliegenden Erfindung grundsätzlich ein Drehwinkel einer rotationsfähigen Vorrichtung, beispielsweise des rotierenden Elements oder eines Geberrads, bezüglich einer senkrecht auf der Rotationsachse stehenden Achse verstanden.

Das Sensorsystem kann insbesondere zum Einsatz in einem Kraftfahrzeug eingerichtet sein, insbesondere für Traktionsanwendungen für elektrische Maschinen. Unter einem "rotierenden Element" wird im Rahmen der vorliegenden Erfindung grundsätzlich ein beliebiges Element verstanden, welches um mindestens eine Achse rotiert. Beispielsweise kann das rotierende Element eine Welle sein, beispielsweise eine Welle in einer Antriebsmaschine, beispielsweise eine Nockenwelle oder eine Kurbelwelle. Beispielsweise kann eine Winkelposition einer Nockenwelle oder eine Drehzahl einer Nockenwelle oder eine Winkelbeschleunigung einer Nockenwelle oder eine Kombination von mindestens zwei dieser Größen bestimmt werden. Auch andere Eigenschaften und/oder andere Kombinationen von Eigenschaften können erfassbar sein.

Das Sensorsystem umfasst mindestens einen Inertialsensor. Unter einem Inertialsensor kann ein Sensor verstanden werden, welcher eingerichtet ist zu einer Messung translatorischer und rotatorischer Beschleunigungen. Der Inertialsensor weist mindestens eine Vorrichtung auf, welche eingerichtet ist, um mindestens eine mechanische Größe des rotierenden Elements zu erfassen. Unter einer mechanischen Größe kann grundsätzlich eine beliebige erfassbare mechanische Größe des rotierenden Elements verstanden werden. Die mechanische Größe kann mindestens eine Größe sein ausgewählt aus der Gruppe bestehend aus: einer Drehzahl; einer Drehrate, insbesondere einer Drehrate um die Rotationssachse; einer Beschleunigung, beispielsweise einer Radialbeschleunigung. Die Beschleunigung kann bevorzugt eine Beschleunigung radial zur Drehachse sein, also eine Zentrifugalkraft, oder kann in mehreren Raumrichtungen erfasst werden beispielsweise zur Überwachung der Laufruhe bzw. zur Detektion von Lagerschäden und Erkennung einer Unwucht. Der Inertialsensor kann mindestens einen mikromechanischen Beschleunigungssensor und/oder mindestens einen mikromechanischem Drehratesensor aufweisen. Unter einem "Mikromechanischen Beschleunigungssensor" kann ein Sensor verstanden werden, welcher eingerichtet ist, eine Beschleunigung in einer oder mehreren Raumrichtungen unter Verwendung von Trägheitskräften zu erfassen. Beispielsweise kann eine Prüfmasse an Federstrukturen aufgehängt sein. Beim Wirken einer Beschleunigung kann auf die Prüfmasse die Trägheitskraft wirken. Durch geeignete Aufhängung der Prüfmasse kann diese Kraft zu einer Auslenkung führen, welche bspw. durch Kammstrukturen in eine Kapazitätsänderung überführt werden kann. Die elektrische Messung von Kapazitäten kann mit bekannten Schaltungskonzepten der Halbleitertechnik möglich sein. Unter einem "Mikromechanischen Drehratesensor" kann ein Sensor verstanden werden, welcher eingerichtet ist, eine Drehrate in einer oder mehreren Raumrichtungen unter Verwendung der Corioliskraft zu erfassen. Beispielsweise kann eine zweigeteilte, als Coriolismasse bezeichnete Struktur an Federstrukturen aufgehängt sein und durch einen Antriebsmechanismus lateral, also in einer Ebene eines Halbleitersubstrats des Sensors antiphasig zum Schwingen angeregt werden. Beim Wirken einer Drehrate in der Richtung senkrecht zur Ebene des Halbleitersubstrats kann auf die Coriolismasse die Corioliskraft senkrecht zur Richtung der Schwingung, und senkrecht zur Richtung der Drehrate, wirken. Durch geeignete Aufhängung der Elemente der Coriolismasse kann diese Kraft zu einer Auslenkung führen, welche beispielsweise durch Kammstrukturen in eine Kapazitätsänderung überführt werden kann. Die elektrische Messung von Kapazitäten kann mit bekannten Schaltungskonzepten der Halbleitertechnik möglich sein. Beispielsweise kann der Inertialsensor eine Vorrichtung zur Erfassung einer Drehrate und eine weitere Vorrichtung zur Erfassung einer Beschleunigung aufweisen.

Der Inertialsensor weist weiterhin mindestens einen Temperatursensor auf, welcher eingerichtet ist, mindestens eine Temperatur des rotierenden Elements zu erfassen. Beispielsweise kann der Temperatursensor eingerichtet sein, um Temperaturen mit mindestens einem mechanischen Kontakt zum Prüfkörper, insbesondere des rotierenden Elements und/oder eines Geberrads und/oder eines Permanentmagneten einer Synchronmachine, zu erfassen. Beispielsweise kann der Temperatursensor eine Änderung eines Widerstands von Metallen oder Halbleiterschichten nutzen. Beispielsweise kann die Erfassung der Temperatur mit PN-Übergängen oder Transistor-Strukturen erfolgen.

Der Inertialsensor weist mindestens eine erste Auswerteeinheit auf, welche eingerichtet ist, mindestens ein erstes Signal, welches mindestens eine Information über die erfasste Temperatur aufweist, und mindestens ein zweites Signal, welches mindestens eine Information über die erfasste mechanische Größe aufweist, zu erzeugen. Unter einer "ersten Auswerteeinheit" kann dabei allgemein eine elektronische Vorrichtung verstanden werden, welche eingerichtet ist, um von der Vorrichtung zur Erfassung der mechanischen Größe und/oder dem Temperatursensor erzeugte Signale auszuwerten. Die Bezeichnung als "erste" Auswerteeinheit ist als reine Bezeichnung zu verstehen und gibt insbesondere keinen Aufschluss, ob weitere Auswerteeinheiten vorgesehen sind. Beispielsweise können zu diesem Zweck eine oder mehrere elektronische Verbindungen zwischen der Vorrichtung zur Erfassung der mechanischen Größe und der ersten Auswerteeinheit und/oder dem Temperatursensor und der ersten Auswerteeinheit vorgesehen sein. Die erste Auswerteeinheit kann beispielsweise mindestens eine Datenverarbeitungsvorrichtung umfassen, beispielsweise mindestens einen Computer oder Mikrocontroller. Die Datenverarbeitungsvorrichtung kann einen oder mehrere flüchtige und/oder nicht flüchtige Datenspeicher aufweisen, wobei die Datenverarbeitungsvorrichtung beispielsweise programmtechnisch eingerichtet sein kann, um den induktiven Positionssensor anzusteuern. Die erste Auswerteeinheit kann beispielsweise zentral oder auch dezentral aufgebaut sein. Auch andere Ausgestaltungen sind denkbar. Die Signalauswertung in der ersten Auswerteeinhat kann derart erfolgen, dass die erste Auswerteeinheit alle von dem Temperatursensor und der Vorrichtung zur Erfassung der mechanischen Größe empfangenen Signale auswertet und in zwei Ausgangssignale, also das erste und das zweite Signal, wandelt. Das erste Signal kann die die Temperatur repräsentieren, während das zweite Signal eine mechanische Größe, beispielsweise die Drehrate, darstellt. Das erste und das zweite Signal können beide analog, beide digital oder eines analog und eines digital sein.

Der Inertialsensor kann mindestens eine Spannungsversorgung aufweisen, welche eingerichtet ist, um die Vorrichtung zur Erfassung der mechanischen Größe und/oder den Temperatursensor mit Spannung zubeaufschlagen. Die Spannungsversorgung kann bevorzugt drahtlos erfolgen, beispielsweise basierend auf RFID (radio-frequency identification) -Techniken und/oder optisch mittels mindestens einer Solarzelle und/oder mittels Energy Harvesting in Folge der Drehbewegung. Alternativ oder zusätzlich kann der Inertialsensor Energiespeicher wie Batterien, Superkondensatoren oder andere Energiequellen aufweisen. Weiterhin kann auch eine Kontaktierung mittels Schleifringen erfolgen. Die Elemente des Inertialsensors können in einem oder in mehreren Chips auf einem oder mehreren Substraten integriert sein. Beispielsweise kann ein Element zur Spannungsversorgung von den anderen Elementen des Inertialsensors getrennt ausgestaltet sein. Ebenso können auch Subkomponenten, beispielsweise Spulen zur induktiven Energie- oder Signalübertragung, von weiteren Subkomponenten getrennt ausgestaltet sein.

Das Sensorsystem umfasst mindestens einen induktiven Positionssensor, welcher eingerichtet ist zur Erfassung mindestens einer Information über die Rotationseigenschaft des rotierenden Elements. Unter einem "induktiven Positionssensor" kann im Rahmen der vorliegenden Erfindung grundsätzlich ein beliebiger Sensor verstanden werden, der eine Information, insbesondere ein Signal, entsprechend einer erfassten Eigenschaft erzeugen kann, insbesondere ein Messsignal, insbesondere ein elektrisches Messsignal, beispielsweise eine Spannung oder einen Strom, wobei eine Erzeugung des Messsignals auf einer Änderung eines magnetischen Flusses beruht. Insbesondere kann die erfasste Eigenschaft eine Position, beispielsweise eine Winkelposition umfassen. Insbesondere kann es sich bei dem induktiven Positionssensor um einen induktiven Magnetsensor handeln. Insbesondere kann der induktive Positionssensor ein induktiver Rotorlagesensor oder Rotorpositionssensor sein. Auch andere Ausgestaltungen sind jedoch grundsätzlich möglich.

Der induktive Positionssensor kann mindestens einen Schaltungsträger aufweisen. Unter einem "Schaltungsträger" kann eine Vorrichtung verstanden werden, auf welcher mindestens ein elektrisches Bauelement angeordnet werden kann. Der Schaltungsträger kann flexibel ausgestaltet sein. Insbesondere kann der Schaltungsträger ein flexibles Material umfassen. Der Schaltungsträger kann insbesondere ausgewählt sein aus der Gruppe bestehend aus: einer Leiterplatte, insbesondere einer Starrflex-Leiterplatte, beispielsweise einer gebogenen Starrflex-Leiterplatte; einer starren Leiterplatte, insbesondere einer starren Leiterplatte mit Einkerbungen; einer Leiterkarte; einer Platine und einer gedruckten Schaltung, insbesondere einem "printed circuit board" (PCB).

Der Schaltungsträger kann im Wesentlichen koaxial zu der Rotationsachse angeordnet sein. Der Schaltungsträger kann beispielsweise ein Geberrad oder ein Kreissegment des Geberrads eines weiter unten beschriebenen Sensorsystems im Wesentlichen kreisförmig oder kreissegmentförmig umgeben. Unter dem Begriff "im Wesentlichen kreisförmig" wird im Rahmen der vorliegenden Erfindung grundsätzlich verstanden, dass das beschriebene Bauelement einen Krümmungsradius aufweist. Der Krümmungsradius kann innerhalb des Bauelements um einen Wert von 0 % bis 80 %, bevorzugt von 0 % bis 50 %, mehr bevorzugt von 0 % bis 20 % und besonders bevorzugt von 0 % bis 5 % variieren. Insbesondere kann der Krümmungsradius auch konstant sein. Alternativ oder zusätzlich kann der Schaltungsträger auch aus zwei oder mehr Segmenten zusammengesetzt sein, welche beispielsweise jeweils eben oder auch gekrümmt ausgestaltet sein können und welche beispielsweise miteinander verbunden sein können. Die Segmente können insgesamt dann ebenfalls koaxial zur Rotationsachse angeordnet sein, auch wenn die einzelnen Segmente dann beispielsweise tangential angeordnet sind. Weiterhin kann der Schaltungsträger in einem Gehäuse, insbesondere in einem Spritzgussgehäuse, angeordnet sein.

Der induktive Positionssensor kann mindestens eine Spulenanordnung aufweisen, welche auf dem Schaltungsträger angeordnet ist. Die Spulenanordnung kann mindestens eine Erregerspule und mindestens zwei Empfängerspulen umfassen. Unter einer "Spulenanordnung" kann im Rahmen der vorliegenden Erfindung grundsätzlich eine beliebige Vorrichtung verstanden werden, die mindestens eine Spule umfasst. Unter einer "Spule" wird im Rahmen der vorliegenden Erfindung grundsätzlich ein beliebiges Bauelement verstanden, welches eine Induktivität aufweist und geeignet ist, bei Stromfluss ein Magnetfeld zu erzeugen und/oder umgekehrt. Beispielsweise kann eine Spule mindestens eine vollständige oder teilweise geschlossene Leiterschleife oder Windung umfassen. Unter einer "Erregerspule" kann im Rahmen der vorliegenden Erfindung grundsätzlich eine Spule verstanden werden, welche bei Anlegen einer elektrischen Spannung und/oder eines elektrischen Stroms einen magnetischen Fluss erzeugt. Die Erregerspule kann mindestens eine Erregerwindung aufweisen. Unter einer "Empfängerspule" wird im Rahmen der vorliegenden Erfindung grundsätzlich eine Spule verstanden, welche eingerichtet ist, aufgrund einer induktiven Kopplung zwischen Erregerspule und Empfängerspule ein Signal zu erzeugen, welches abhängig ist von der induktiven Kopplung. Beispielsweise kann die Spulenanordnung ein Empfängerspulensystem aufweisen. Unter einem "Empfängerspulensystem" kann im Rahmen der vorliegenden Erfindung grundsätzlich eine beliebige Vorrichtung verstanden werden, welche mindestens zwei, bevorzugt mindestens drei, Empfängerspulen umfasst.

Die Erregerspule kann im Wesentlichen kreisförmig ausgestaltet sein. Hinsichtlich des Begriffs "im Wesentlichen kreisförmig" wird auf obige Definition verwiesen. Die Erregerspule und die Empfängerspulen können wie in DE 10 2017 210 655.7, eingereicht am 23.06.2017, beschrieben ausgestaltet sein. Die Empfängerspulen können die Rotationsachse in einer Umfangsrichtung im Wesentlichen vollständig umlaufen, wobei jede Empfängerspule durch eine Mehrzahl benachbarter Teilwindungen gebildet ist, wobei benachbarte Teilwindungen bezüglich der Stromlaufrichtung gegensätzlich orientiert sind. Dabei ist jede Teilwindung bezüglich einer radialen Richtung, die sich von der Rotationsachse nach außen erstreckt, gebildet aus Abschnitten von wenigstens zwei nach links gekrümmten kreisbogenförmigen Leiterbahnen und aus Abschnitten von wenigstens zwei nach rechts gekrümmten kreisbogenförmigen Leiterbahnen. Alle linksgekrümmten und alle rechtsgekrümmten Leiterbahnen weisen denselben Krümmungsradius auf. Alle linksgekrümmten Leiterbahnen und alle rechtsgekrümmten Leiterbahnen erstrecken sich zwischen zwei konzentrischen Kreisen um die Rotationsachse, einem ersten Kreis mit einem ersten Radius und einem zweiten Kreis mit einem zweiten Radius, wobei ein dritter Kreis gegeben ist, der konzentrisch zum ersten Kreis gelegen ist und einen dritten Radius aufweist, der sich aus dem Mittelwert des ersten Radius und des zweiten Radius ergibt, wobei eine erste rechtsgekrümmte Leiterbahn durch drei Punkte verläuft: durch einen ersten Punkt, der auf dem ersten Kreis liegt; durch einen zweiten Punkt, der auf dem dritten Kreis liegt und in Umfangsrichtung um ein Viertel des Messbereichs gegenüber dem ersten Punkt verdreht ist; und durch einen dritten Punkt, der auf dem zweiten Kreis liegt und in Umfangsrichtung um die Hälfte des Messbereichs gegenüber dem ersten Punkt verdreht ist. Die weiteren rechtsgekrümmten Leiterbahnen ergeben sich aus der vorfolgenden rechtsgekrümmten Leiterbahn durch eine Drehung um die Drehachse um die Hälfte des Messbereichs in Umfangsrichtung. Die linksgekrümmten Leiterbahnen ergeben sich durch Spiegelungen der rechtsgekrümmten Leiterbahnen jeweils an einer Radiallinie, die sich von der Drehachse durch den Schnittpunkt der jeweiligen rechtsgekrümmten Leiterbahn mit dem dritten Kreis erstreckt. Eine Teilwindung einer Empfängerspule kann dabei als ein Teil der Empfängerspule definiert sein, der von Leiterbahnen der Empfängerspule umgeben ist, die sich nicht gegenseitig schneiden. Die Orientierung einer Teilwindung bestimmt sich über einen Stromfluss durch die Empfängerspule. Gegenläufig orientierte Teilwindungen weisen bei einem Stromfluss durch die Empfängerspule jeweils gegenläufig Stromflüsse auf, d.h. bei einer Teilwindung mit einer ersten Orientierung läuft der Strom im Uhrzeigersinn bzw. nach rechts durch die Teilwindung, bei einer Teilwindung mit einer zweiten, gegenläufigen Orientierung läuft der Strom gegen den Uhrzeigersinn bzw. nach links durch die Teilwindung. Eine Teilwindung kann lediglich beispielhaft wie eine Raute mit gekrümmten Seitenflächen aufgebaut sein. Die vier Seitenflächen einer solchen Raute können z.B. durch je zwei Teilstücke zweier linksgekrümmter Leiterbahnen und zweier rechtsgekrümmter Leiterbahnen ausgebildet sein. Beispielsweise kann dabei die Stromlaufrichtung in wenigstens zwei Abschnitten der linksgekrümmten Leiterbahnen, die eine Teilwindung bilden, einander entgegengesetzt sein. Ebenso kann die Stromlaufrichtung in wenigstens zwei Abschnitten der rechtsgekrümmten Leiterbahnen, die eine Teilwindung bilden, einander entgegengesetzt sein. Der Aufbau der Teilwindungen ist dabei so zu verstehen, dass eine gedachte gerade Linie, die von der Rotationsachse ausgeht und in radialer Richtung verläuft, eine nach links und eine nach rechts gekrümmte kreisbogenförmige Leiterbahn der Empfängerspule schneidet, wenn die gerade Linie durch das Innere der Empfängerspule verläuft. Auf diese Weise kann z.B. auch erreicht werden, dass die Amplitude der in der Empfängerspule induzierten Wechselspannung bzw. das Messsignal im Wesentlichen als Sinusfunktion von dem Drehwinkel abhängt.

Der induktive Positionssensor kann eine Anzahl von n Empfängerspulen umfassen, wobei n eine positive ganze Zahl ist. Die generierten sinusförmigen Signale der n Empfängerspulen können gegeneinander phasenversetzt sein. Beispielsweise können benachbarte sinusförmige Signale einen Phasenabstand von 2π/(2n) und/oder 360°/(2n) für n=2 aufweisen. Weiterhin können beispielsweise benachbarte sinusförmige Signale einen Phasenabstand von 2π/(n) und/oder 360°/(n) für n≥3 aufweisen. Insbesondere können benachbarte sinusförmige Signale von genau zwei Empfängerspulen einen Phasenabstand von 90° aufweisen. Insbesondere können benachbarte sinusförmige Signale von genau drei Empfängerspulen einen Phasenabstand von 120° aufweisen.

Der induktive Positionssensor kann mindestens eine anwendungsspezifische integrierte Schaltung (ASIC) aufweisen, welche auf dem Schaltungsträger angeordnet ist. Unter einer "anwendungsspezifischen integrierten Schaltung" (ASIC) kann eine grundsätzlich beliebige elektronische Schaltung verstanden werden, welche als integrierter Schaltkreis realisiert wurde.

Die anwendungsspezifische integrierte Schaltung kann eingerichtet sein, um ein Erregersignal für die Erregerspule bereitzustellen. Die anwendungsspezifische integrierte Schaltung kann auf dem Schaltungsträger angeordnet sein und an genau eine Erregerspule und mindestens zwei Empfängerspulen angeschlossen sein. Unter ein "Erregersignal bereitzustellen" kann verstanden werden, dass die anwendungsspezifische integrierte Schaltung eingerichtet ist, das Erregersignal zu erzeugen und/oder dass die anwendungsspezifische integrierte Schaltung eingerichtet ist, die Erregerspule mit dem Erregersignal zu beaufschlagen. Unter einem "Erregersignal" kann im Rahmen der vorliegenden Erfindung ein elektrisches Signal verstanden werden, insbesondere mindestens eine Wechselspannung und/oder mindestens ein Wechselstrom. Das Erregersignal kann ein im Wesentlichen sinusförmiges Erregersignal sein. Unter "sinusförmig" wird im Rahmen der vorliegenden Erfindung grundsätzlich eine beliebige Form verstanden, welche einen Verlauf einer Sinuskurve aufweist. Beispielsweise kann ein Verlauf einer vollständigen Sinuskurve umfasst sein oder lediglich ein Teil einer Sinuskurve. Unter "im Wesentlichen sinusförmig" können Ausführungsformen verstanden werden mit einem vollständig sinusförmigen Verlauf, wobei Abweichungen denkbar sind, welche nicht mehr als 20 %, insbesondere nicht mehr als 10 % oder sogar nicht mehr als 5 % von dem absoluten Wert der Sinusform betragen. Unter einer "vollständigen Sinuskurve" kann dabei insbesondere ein Verlauf einer Sinuskurve verstanden werden, welcher mindestens eine Periode umfasst. Hierbei kann die Sinuskurve im Nullpunkt oder einem beliebigen anderen Punkt der Sinuskurve beginnen. Die Sinusform kann beispielsweise auch abschnittsweise aus anderen Funktionen zusammengesetzt werden, so dass sich insgesamt eine näherungsweise Sinusform ergibt. Das Erregersignal kann eine Amplitude im Bereich von 0,1 V bis 10 V, bevorzugt von 5 V, aufweisen. Das Erregersignal kann eine Frequenz im Bereich von 1 MHz bis 10 MHz, bevorzugt 3,5 MHz aufweisen. Die anwendungsspezifische integrierte Schaltung kann mindestens eine Oszillatorschaltung aufweisen. Die Oszillatorschaltung kann beispielsweise einen LC Oszillator treiben, bei welchem die Erregerspule und ein Kondensator als frequenzbestimmende Elemente wirken. Durch die Beaufschlagung der Erregerspule mit dem Erregersignal kann ein elektromagnetisches Wechselfeld entstehen, welches in die Empfängerspulen koppelt und dort beispielsweise entsprechende Wechselspannungen und/oder Wechselströme induziert. Der induktive Positionssensor kann eingerichtet sein, um eine induktive Kopplung und/oder eine Änderung einer induktiven Kopplung zwischen der Erregerspule und der mindestens einen Empfängerspule zu erfassen. Die Erregerspule kann eingerichtet sein, um in Antwort auf die Beaufschlagung mit dem Erregersignal ein elektromagnetisches Wechselfeld zu erzeugen. Die Erregerspule und die Empfängerspulen können derart gekoppelt sein, dass das elektromagnetische Wechselfeld in den Empfängerspulen eine Wechselspannung induziert. Die Empfängerspulen können derart angeordnet sein, dass die Empfängerspulen bei einer Rotation des rotierenden Elements mit konstanter Winkelgeschwindigkeit um die Rotationsachse drehwinkelabhängige Signale generieren.

Die anwendungsspezifische integrierte Schaltung kann eingerichtet sein, um von den Empfängerspulen erzeugte Signale zu verarbeiten und als mindestens ein erstes Ausgangssignal an mindestens einem ersten Ausgang und mindestens ein zweites Ausgangssignal an mindestens einem zweiten Ausgang bereitzustellen. Die Bezeichnung als "erstes" und "zweites" Ausgangssignal sind als reine Bezeichnungen zu verstehen und geben insbesondere keine Aufschluss über eine Reihenfolge oder ob weitere Ausgangssignale vorhanden sind. Unter "Verarbeiten" kann grundsätzlich eine beliebige Operation einer Signalverarbeitung verstanden werden, um ein Ausgangsignal zu erzeugen, beispielsweise ein Auswerten, ein Filtern, ein Demodulieren. Die Signalverarbeitung kann digital und/oder analog erfolgen. Bevorzugt kann die Signalverarbeitung rein analog erfolgen. Die anwendungsspezifische integrierte Schaltung kann insbesondere eingerichtet sein, um durch Demodulation eines in den Empfängerspulen induzierten Signals mit einem Trägersignal, also einem Signal der Erregerspule auch Sendespule genannt, auf einen Betrag und eine Phase der Kopplung zu schließen. Der Betrag kann insbesondere kontinuierlich mit dem Drehwinkel variieren. Eine Phasenlage kann beispielsweise 0° oder 180° betragen. Die anwendungsspezifische integrierte Schaltung kann mindestens eine Demodulationsvorrichtung aufweisen, welche eingerichtet ist, um die Signale der Empfängerspulen zu demodulieren, insbesondere synchron. Das Demodulieren kann ein Multiplizieren mit dem Erregersignal umfassen. Beispielsweise kann durch eine Multiplikation des Betrags mit einer Kosinusfunktion ein vorzugsweise offsetfreies Sin/Cos-System entstehen, insbesondere bei Verwendung von zwei Empfängerspulen mit 90° Phasenversatz bezogen auf den Messbereich. Bei Verwendung von drei Empfängerspulen mit typischerweise 120° Phasenversatz bezogen auf den Messbereich kann insbesondere ein dreiphasiges Sinussignal entstehen, welches beispielsweise durch Anwendung der Clarke-Transformation in ein Sin/Cos-System überführt werden kann. Mit Hilfe der Arkustangens-Funktion kann dann auf den Drehwinkel geschlossen werden. Die anwendungsspezifische integrierte Schaltung kann mindestens einen Tiefpassfilter aufweisen. Der Tiefpassfilter kann eine Grenzfrequenz im Bereich von 50 kHz bis zu 500 kHz, bevorzugt 100 kHz, aufweisen. Die untere Grenzfrequenz kann deutlich geringer ausfallen, da lediglich Offsets kompensiert werden sollen, so dass beispielsweise 0,1 Hz ausreichend wäre. Beispielsweise kann die anwendungsspezifische integrierte Schaltung zunächst die Signale der Empfängerspulen demodulieren \und anschließend mittels des Tiefpasses filtern. Die anwendungsspezifische integrierte Schaltung kann mindestens einen Verstärker aufweisen. Der Verstärker kann eingerichtet sein, um die Signale der Empfängerspulen, insbesondere die gefilterten Signale, zu verstärken. Unter "Verstärken" kann eine Erhöhung einer Amplitude eines Signals verstanden werden. Die anwendungsspezifische integrierte Schaltung kann weiter eingerichtet sein, die Signale der Empfängerspulen mit einem DC(Gleichstrom)-Offset zu beaufschlagen. Das erste Ausgangssignal und das zweite Ausgangssignal können von dem ersten und zweiten Ausgang beispielsweise über mindestens eine elektrische Signalleitung, insbesondere ein Kabel, an eine zweite Auswerteeinheit, insbesondere eine von dem Schaltungsträger getrennt ausgestaltete Auswerteeinheit, übertragen werden.

Das Sensorsystem umfasst mindestens eine zweite Auswerteeinheit. Unter einer "zweiten Auswerteeinheit" kann dabei allgemein eine elektronische Vorrichtung verstanden sein, welche eingerichtet ist, um von dem induktiven Positionssensor erzeugte Signale auszuwerten. Beispielsweise können zu diesem Zweck eine oder mehrere elektronische Verbindungen zwischen dem induktiven Positionssensor und der zweiten Auswerteeinheit vorgesehen sein. Die Bezeichnung als "zweite Auswerteeinheit" ist wieder als reine Bezeichnung zu verstehen. Die zweite Auswerteeinheit kann beispielsweise mindestens eine Datenverarbeitungsvorrichtung umfassen, beispielsweise mindestens einen Computer oder Mikrocontroller. Die Datenverarbeitungsvorrichtung kann einen oder mehrere flüchtige und/oder nicht flüchtige Datenspeicher aufweisen, wobei die Datenverarbeitungsvorrichtung beispielsweise programmtechnisch eingerichtet sein kann, um den induktiven Positionssensor anzusteuern. Die zweite Auswerteeinheit kann weiterhin mindestens eine Schnittstelle umfassen, beispielsweise eine elektronische Schnittstelle und/oder eine Mensch-Maschine-Schnittstelle wie beispielsweise eine Eingabe-/Ausgabe-Vorrichtung wie ein Display und/oder eine Tastatur. Die zweite Auswerteeinheit kann beispielsweise zentral oder auch dezentral aufgebaut sein. Auch andere Ausgestaltungen sind denkbar.

Das Sensorsystem kann mindestens ein mit dem rotierenden Element verbindbares Geberrad aufweisen. Unter einem "Geberrad" kann im Rahmen der vorliegenden Erfindung grundsätzlich ein beliebiges mit dem rotierenden Element verbindbares Bauelement verstanden werden, das eingerichtet ist, bei Verbindung mit dem rotierenden Element pro Umdrehung des rotierenden Elements mindestens ein messbares Signal, insbesondere eine Magnetfeldänderung, zu bewirken. Das Geberrad kann beispielsweise permanent oder reversibel mit dem rotierenden Element verbunden oder verbindbar sein oder kann auch einstückig mit dem rotierenden Element ausgebildet oder in das rotierende Element integriert sein. Das Geberrad kann ein Geberradprofil aufweisen. Unter einem "Geberradprofil" kann im Rahmen der vorliegenden Erfindung grundsätzlich eine Gesamtheit von Profilelementen und von Zwischenräumen, die zwischen den Profilelementen angeordnet sind, verstanden werden. Unter einem "Profilelement" des Geberrads kann im Rahmen der vorliegenden Erfindung grundsätzlich eine beliebige Ausformung der Kontur des Geberrads verstanden werden, insbesondere eine Ausbuchtung, beispielsweise eine stiftförmige, eine zahnförmige oder eine zackenförmige Ausbuchtung, oder eine Einkerbung oder eine Aussparung, beispielsweise ein Loch.

Das Geberrad kann beispielsweise ausgestaltet sein, um je nach seiner Stellung Bereiche einer Empfängerspulenstruktur "abzuschatten". Dadurch kann eine Kopplung zwischen einer Sendespulenstruktur und den Empfängerspulen drehwinkelabhängig beeinflusst werden. Ein typischer Wertebereich eines Kopplungsfaktors kann beispielsweise -0,3 bis +0,3 betragen. Unter einem Koppelfaktor kann dabei insbesondere ein Amplitudenverhältnis zwischen einem Empfangssignal und einem Sende- oder Erregersignal verstanden werden. Der Koppelfaktor kann insbesondere sinusförmig mit dem Drehwinkel verlaufen.

Die Spulenanordnung kann das Geberrad oder mindestens ein Kreissegment des Geberrads im Wesentlichen kreissegmentförmig oder kreisförmig umgeben. Insbesondere kann die Spulenanordnung, insbesondere die auf dem Schaltungsträger angeordnete Spulenanordnung, in mindestens einer Winkelposition des Geberrads mindestens ein Profilelement und mindestens einen Zwischenraum zwischen zwei Profilelementen des Geberrads abdecken.

Das Geberrad kann rotationssymmetrisch ausgestaltet sein. Das Geberrad kann eine identische Anzahl an elektrisch leitfähigen Flügeln und elektrisch nicht oder weniger leitfähigen Flügeln und/oder Aussparungen aufweisen. Die elektrisch leitfähigen Flügel können einen ersten Öffnungswinkel α und die elektrisch nicht oder weniger leitfähigen Flügel und/oder die Aussparungen einen zweiten Öffnungswinkel β aufweisen. Eine Summe des ersten und des zweiten Öffnungswinkel kann einem vollen Winkelmessbereich des induktiven Positionssensors entsprechen. Der erste und der zweite Öffnungswinkel können identisch oder verschieden sein. Das Geberrad kann an dem rotierenden Element mittels einer Schraub- und/oder Klebeverbindung befestigt sein.

Die zweite Auswerteeinheit kann eingerichtet sein, um aus Signalen der Empfängerspulen auf eine Winkelposition Φ des Geberrads zu schließen. Das Sensorsystem, insbesondere der induktive Positionssensor, kann eingerichtet sein, eine induktive Kopplung und/oder eine Änderung einer induktiven Kopplung zwischen der Erregerspule und der mindestens einen Empfängerspule zu erfassen. Insbesondere kann das Sensorsystem eingerichtet sein, die durch eine Bewegung und/oder eine Position des Geberrades bewirkte induktive Kopplung und/oder die durch eine Bewegung und/oder eine Position des Geberrades bewirkte Änderung der induktiven Kopplung zwischen der Erregerspule und den Empfängerspulen zu erfassen. Das Sensorsystem kann insbesondere eingerichtet sein, um aus der durch die Bewegung und/oder durch eine Position des Geberrads bewirkten Änderung der induktiven Kopplung zwischen der Erregerspule und den Empfängerspulen eine absolute oder relative Winkelposition des rotierenden Elements zu bestimmen. Unter einer "relativen Winkelposition" kann dabei grundsätzlich eine Position bezüglich einer durch die Empfängerspulen definierten Periode verstanden werden. Insbesondere kann die zweite Auswerteeinheit derart eingerichtet sein, um mindestens ein Quotientensignal mindestens zweier Signale mindestens zweier Empfängerspulen zu generieren. Beispielsweise kann für die Berechnung der Winkelposition Φ aus zwei von zwei Empfängerspulen generierten Signalen die Gesetzmäßigkeit tanΦ = sinΦ / cosΦ verwendet werden. Beispielsweise kann für die Berechnung der Winkelposition Φ aus drei von drei Empfängerspulen generierten Signalen die Clarke-Transformation verwendet werden. Insbesondere kann die Auswerteeinheit mindestens eine Auswerteschaltung aufweisen. Insbesondere kann die Auswerteschaltung eingerichtet sein, die Signale des Positionssensors auszuwerten. Bei der Auswerteschaltung kann es sich beispielsweise um einen Prozessor handeln. Die Auswerteeinheit kann insbesondere getrennt von dem Schaltungsträger ausgestaltet sein und kann mit dem Schaltungsträger über mindestens eine Verbindung, beispielsweise ein Kabel, verbindbar sein. Der induktive Positionssensor kann eingerichtet sein, das erste und das zweite Ausgangssignal an die zweite Auswerteeinheit zu übermitteln.

Der Intertialsensor weist mindestens eine erste Schnittstelle auf, welche eingerichtet ist, das erste Signal und das zweite Signal drahtlos an den induktiven Positionssensor zu übermitteln, insbesondere zu übertragen. Der induktive Positionssensor weist mindestens eine zweite Schnittstelle auf, welche eingerichtet ist, das erste und das zweite Signal zu empfangen. Die erste Schnittstelle und die zweite Schnittstelle können als Schnittstellen für eine drahtlose Kommunikation, insbesondere eine drahtlose Datenübertragung und/oder Signalübertragung, ausgestaltet sein. Das erste und das zweite Signal können von dem Inertialsensor über verschiedene Schnittstellen übermittelt werden oder über eine gemeinsame Schnittstelle. Zur Signal- und/oder Datenübertagung kann beispielsweise kann ein SENT- Protokoll eingesetzt werden und das erste Signal beispielsweise über einen Slowchannel übertragen werden. Die drahtlose Datenübetragung kann beispielsweise mittels Methoden des RFIDs erfolgen, insbesondere durch Backscatter-Verfahren, aber auch, alternativ oder zusätzlich, durch aktives Senden, insbesondere auf Seiten des Sensors. Alternativ oder zusätzlich ist die Verwendung traditioneller Funkverfahren möglich. Ebenso ist, wiederum alternativ oder zusätzlich, für die drahtlose Datenübertragung auch eine optische Übertragung der Daten möglich, beispielsweise mit mindestens einer Leuchtdiode und/oder mindestens einem Laser als Sender und mindestens einem Photodetektor, insbesondere mindestens einer Photodiode, als Empfänger. Wiederum alternativ oder zusätzlich ist eine akustische Übertragung möglich, beispipelsweise mit mindestens einem Schallerzeuger als Sender und mindestens einem Schallsensor, beispielsweise mindestens einem Mikrofon, als Empfäger. Auch eine Übertragung mittels Körperschall ist vorstellbar.

Der induktive Positionssensor weist mindestens eine dritte Schnittstelle auf, welche eingerichtet ist, das erste Signal und das zweite Signal sowie die Information über die Rotationseigenschaft an die zweite Auswerteeinheit zu übermitteln, beispielsweise über mindestens eine elektrische Signalleitung, insbesondere ein Kabel.

Der induktive Positionssensor kann mindestens eine Signalverarbeitungseinheit aufweisen, welche eingerichtet ist, das erste Signal und das zweite Signal zu verarbeiten. Unter einer Signalverarbeitungseinheit kann eine belibiege Vorrichtung verstanden werden, welche eingerichtet ist, mindestens ein Signal weiter zu verarbeiten. Die Signalverarbeitungseinheit kann mindestens einen Datenspeicher aufweisen. Die Signalverarbeitungseinheit kann mindestens einen Prozessor aufweisen. Die Signalverarbeitungseinheit kann mindestens eine elektrische Schaltung zur Signalverarbeitung aufweisen. Die Signalverarbeitungseinheit kann mindestens einen Verstärker und/oder mindestens einem Filter und/oder mindestens einen Dividierer und/oder mindestens einen Multiplizierer und/oder mindestens einen Addierer aufweisen. Das Verarbeiten des ersten und des zweiten Signals kann mindestens eine Maßnahme umfassen ausgewählt aus der Gruppe bestehen aus: ein Erzeugen von einem dritten und einem vierten Aussgangssignal; ein Bestimmen einer Information über eine Drehrichtung; ein Bestimmen einer Information über eine Drehzahl; ein Bestimmen einer binären Information über eine Überschreitung eines vorbestimmten und/oder vorgegebenen Grenzwerts einer Beschleunigung und/oder Drehzahl. Die Signalverarbeitungseinheit kann eingerichtet sein, das dritte und vierte Ausgangssignal an einen dritten und einen vierten Ausgang des induktiven Positionssensors bereitzustellen. Der induktive Positionssensor kann mindestens eine Recheneinheit aufweisen, welche eingerichtet ist, um aus dem zweiten Signal eine Information über eine zukünftige Rotationsseigenschaft des um die Rotationsachse rotierenden Elements zu bestimmen. Unter einer Recheneinheit kann eine beliebige Vorrichtung verstanden werden, welche eingerichtet ist, mindestens eine mathematische Operation zur Bestimmung der Information der zukünftigen Rotationseigenschaft durchzuführen. Die zukünftige Rotationseigenschaft kann eine Rotationseigenschaft eines zeitlich auf einen ersten Messwert folgenden zweiten Messwerts des induktiven Positionssensors sein, also beispielsweise die nächste mit dem induktiven Positionssensor erfasste Information über die Rotationseigenschaft. Beispielsweise kann das zweite Signal ein Drehratesignal sein, welches zur Plausibilisierung der mit dem induktiven Positionssensor erfassten Drehwinkelinformation genutzt werden kann. Eine direkt gemessene Rotordrehzahl kann zur Plausibilisierung von zeitlich aufeinander folgenden Rotorpositionsmessungen verwendet werden. So kann ein plausibilisierter nächsten Messwert α_{neu,plau} des jeweils nächsten Messwerts αₙₑᵤ des induktiven Positionssensors zu einem vorhergehenden Messwert αₐₗₜ des induktiven Positionssensors mit einer Integration der Drehrate R(t) bestimmt werden: α_{neu,plau} = 0,5*αₙₑᵤ + 0,5*(αₐₗₜ + R(t) *Δt), wobei t die Zeit ist.

Alternativ oder zusätzlich zu einer Signalverarbeitung des ersten und zweiten Signals in dem induktiven Positionssensor kann eine Vorverarbeitung bereits im Temperatursensor oder Inertialsensor selbst und/oder aber in der zweiten Auswerteeinheit erfolgen. Die anwendungsspezifische integrierte Schaltung kann mindestens ein Schaltelement aufweisen. Der induktive Positionssensor kann mindestens eine Steuereinheit aufweisen, welche eingerichtet ist, um das Schaltelement zu steuern, derart dass bei einem Fehlerfall eine Signalkette der anwendungsspezifischen integrierten Schaltung zu dem ersten und dem zweiten Ausgang unterbrochen wird und der erste und der zweite Ausgang mit mindestens einem Fehlersignal überschrieben werden. Das Schaltelement kann insbesondere einen Schalter aufweisen. Unter einem "Fehlersignal" kann ein beliebiges Signal verstanden werden, welches der zweiten Auswerteeinheit signalisiert, dass ein Fehlerfall vorliegt. Um im Fehlerfall, beispielsweise ein Durchgehen des Motors, also der unkontrollierbaren Erhöhung der Drehzahl, schnell reagieren zu können, kann es vorteilhaft sein, eine Signalverarbeitung nicht erst in der zweiten Auswerteeinheit vorzunehmen. So kann es möglich sein, bei Erkennen eines Fehlerfalles ein "Interrupt" über die Ausgangssignale des induktiven Positionssensors vorzunehmen.Die Steuereinheit kann eingerichtet sein, das Schaltelement anzusteuern und im Fehlerfall über das Schaltelement die Signalkette des induktiven Positionssensors zu unterbrechen und die ersten und zweiten Ausgänge jeweils mit dem mindestens einem Fehlersignal zu überschreiben. Das Fehlersignal kann dafür Werte annehmen, welche nicht im ansonsten gültigen Signalbereich der Signale der üblichen ersten und zweiten Ausgangsignale des ASICs liegen. Beispielsweise kann das Fehlersignal für den ersten und den zweiten Ausgang identische Werte annehmen, welche entweder maximal oder minimal sind, bezogen auf den verfügbaren Spannungshub. In diesem Fall ist die sonst gültige trigonometrische Beziehung sin²+cos²=1 nicht mehr gültig und die zweite Auswerteeinheit kann die Maschine in einen sicheren Zustand, z.B. einen aktiven Kurzschluss, versetzen. So kann eine die funktionale Sicherheit signifikant erhöht werden. Grundsätzlich sind auch Mischformen der beschriebenen Ausführungsformen umsetzbar. Es ist beispielsweise denkbar, dass die Temperatur über eine Schnittstelle zur zweiten Auswerteeinheit gesendet wird, während die mechanische Größe vorverarbeitet wird und nur bei Eintreten einer bestimmten Bedingung die Signale des induktiven Positionssensors überschreibt.

Der induktive Positionssensor kann mindestens ein Kontaktelement aufweisen. Der induktive Positionssensor kann mit der zweiten Auswerteeinheit mittels des Kontaktelements verbindbar sein. Das Kontaktelement kann ausgewählt sein aus der Gruppe bestehend aus: mindestens eine Bohrung für Rammkontakte, mindestens ein aufgelöteter Stecker, mindestens ein Kontaktpad. Der induktive Positionssensor kann eine Verpackung aufweisen, insbesondere um den induktiven Positionssensor mit einem Spanschutz zu versehen. Die Verpackung kann mindestens ein Verbindungselement aufweisen. Der induktive Positionssensor kann mittels des Verbindungselements an einer weiteren Vorrichtung befestigbar sein. Diese kann durch eines oder mehrere der Verfahren Direct-injection-molding, Transfermolden mit Duroplast, Thermoplastspritzen oder durch Vergießen realisiert werden. Die Verpackung kann alle Komponenten des induktiven Positionssensors ganz oder teilweise umgeben. Sie kann bevorzugt Bohrungen bzw. Aussparungen aufweisen, durch welche der induktive Positionssensor mit einer Schraubverbindung beispielsweise an einem B-Lagerschild der weiteren Vorrichtung befestigt werden kann. Alternativ oder zusätzlich kann der induktive Positionssensor auch mit Clips, einer Klebverbindung oder weiteren Verfahren, beispielsweise am B-Lagerschild, angebracht werden.

Das Sensorsystem kann ein einzelnes Geberrad oder auch eine Vielzahl Geberräder umfassen. Insbesondere kann das Sensorsystem zwei Geberräder umfassen. Insbesondere können die mindestens zwei Geberräder bezüglich der Rotationsachse zueinander versetzt angeordnet sein, also beispielsweise mit einem axialen Versatz. Die mindestens zwei Geberräder können gleiche oder insbesondere auch unterschiedliche Geberradprofile aufweisen.

In einem weiteren Aspekt der vorliegenden Erfindung wird ein Verfahren zur Bestimmung mindestens einer Temperatur und mindestens einer Rotationseigenschaft eines um mindestens eine Rotationsachse rotierenden Elements vorgeschlagen. Das Verfahren umfasst die Verwendung mindestens eines Sensorsystems. Das Verfahren umfasst die folgenden Schritte, bevorzugt in der angegebenen Reihenfolge. Das Verfahren kann, zusätzlich zu den genannten Verfahrensschritten, auch weitere Verfahrensschritte umfassen. Die Verfahrensschritte sind:
- Erfassen mindestens einer mechanischen Größe des um die Rotationsachse rotierenden Elements mit einer Vorrichtung mindestens eines Inertialsensors und Erfassen mindestens einer Temperatur des um die Rotationsachse rotierenden Elements mit mindestens einem Temperatursensor des Inertialsensors;
- Erzeugen mindestens eines ersten Signals, welches mindestens eine Information über die erfasste Temperatur aufweist, und mindestens eines zweiten Signals, welches mindestens eine Information über die erfassten mechanischen Größe aufweist, mit mindestens einer ersten Auswerteeinheit des Inertialsensors;
- Erfassen mindestens einer Information über eine Rotationseigenschaft des um die Rotationsachse rotierenden Elements mit mindestens einem induktiven Positionssensor;
- Drahtloses Übermitteln des ersten Signals und des zweiten Signals mit mindestens einer ersten Schnittstelle des Inertialsensors an den induktiven Positionssensor und Empfangen des ersten Signals und des zweiten Signals mit mindestens einer zweiten Schnittstelle des induktiven Positionssensors ;
- Übermitteln des ersten und des zweiten Signals und der erfassten Rotationseigenschaft von dem induktiven Positionssensor an mindestens eine zweite Auswerteeinheit des Sensorsystems und Auswertung der Information über die erfasste Rotationseigenschaft und des ersten und zweiten Signals und Ermittlung der Rotationseigenschaft und der Temperatur des um die Rotationsachse rotierenden Elements.

Das Verfahren erfolgt unter Verwendung eines Sensorsystems gemäß der vorliegenden Erfindung, also gemäß einer der oben genannten Ausführungsformen oder gemäß einer der unten noch näher beschriebenen Ausführungsformen. Dementsprechend kann für Definitionen und optionale Ausgestaltungen weitgehend auf die Beschreibung des Sensorsystems verwiesen werden. Auch andere Ausgestaltungen sind jedoch grundsätzlich möglich.

Ferner wird im Rahmen der vorliegenden Erfindung ein Computerprogramm vorgeschlagen, das bei Ablauf auf einem Computer oder Computer-Netzwerk das erfindungsgemäße Verfahren in einer seiner Ausgestaltungen ausführt. Weiterhin wird im Rahmen der vorliegenden Erfindung ein Computerprogramm mit Programmcode-Mitteln vorgeschlagen, um das erfindungsgemäße Verfahren in einer seiner Ausgestaltungen durchzuführen, wenn das Programm auf einem Computer oder Computer-Netzwerk ausgeführt wird. Insbesondere können die Programmcode-Mittel auf einem computerlesbaren Datenträger gespeichert sein. Außerdem wird im Rahmen der vorliegenden Erfindung ein Datenträger vorgeschlagen, auf dem eine Datenstruktur gespeichert ist, die nach einem Laden in einen Arbeits- und/oder Hauptspeicher eines Computers oder Computer-Netzwerkes das erfindungsgemäße Verfahren in einer seiner Ausgestaltungen ausführen kann. Auch wird im Rahmen der vorliegenden Erfindung ein Computerprogramm-Produkt mit auf einem maschinenlesbaren Träger gespeicherten Programmcode-Mitteln vorgeschlagen, um das erfindungsgemäße Verfahren in einer seiner Ausgestaltungen durchzuführen, wenn das Programm auf einem Computer oder Computer-Netzwerk ausgeführt wird. Dabei wird unter einem Computer-Programmprodukt das Programm als handelbares Produkt verstanden. Es kann grundsätzlich in beliebiger Form vorliegen, so zum Beispiel auf Papier oder einem computerlesbaren Datenträger, und kann insbesondere über ein Datenübertragungsnetz verteilt werden. Schließlich wird im Rahmen der vorliegenden Erfindung ein moduliertes Datensignal vorgeschlagen, welches von einem Computersystem oder Computernetzwerk ausführbare Instruktionen zum Ausführen eines Verfahrens nach einer der beschriebenen Ausführungsformen enthält.

### Vorteile der Erfindung

Die vorgeschlagene Vorrichtung und das vorgeschlagene Verfahren weisen gegenüber bekannten Vorrichtungen und Verfahren zahlreiche Vorteile auf. Insbesondere ist es möglich, ein günstiges Sensorkonzept für Temperaturmessung und Ermittlung weiterer mechanischer Größen bereitzustellen. Eine direkt gemessene Rotordrehzahl kann zur Plausibilisierung von zeitlich aufeinander folgenden Rotorpositionsmessungen verwendet werden und so eine funktionale Sicherheit erhöhen. Eine Zustandsüberwachung des Rotors bzw. der Lagerung, Vibration, Unwucht kann möglich sein. Das erfindungsgemäße Messprinzip zur Drehwinkelerfassung zeigt weiter keinen Einfluss von Fremdmagnetfeldern, beispielsweise in Folge von hohen Strömen innerhalb von Kabeln, die in Sensornähe angeordnet sind. Das erfindungsgemäße Messprinzip zur Drehwinkelerfassung ist aufgrund einer hohen Trägerfrequenz praktisch nicht drehzahlbegrenzt.

### Kurze Beschreibung der Zeichnungen

Weitere optionale Einzelheiten und Merkmale der Erfindung ergeben sich aus der nachfolgenden Beschreibung bevorzugter Ausführungsbeispiele, welche in den Figuren schematisch dargestellt sind.

Es zeigen:
- Figuren 1A bis C: schematische Darstellungen von Ausführungsbeispielen eines erfindungsgemäßen Sensorsystems;
- Figur 2: eine schematische Darstellung eines Ausführungsbeispiels eines Inertialsensors;
- Figur 3: ein Ausführungsbeispiel eines Geberrads;
- Figur 4: einen erfindungsgemäßen Aufbau eines ASICs und Weiterverarbeitung der Signale des Inertialsensors;
- Figur 5: Signalformen des erfindungsgemäßen Sensorsystems;
- Figur 6: ein Ausführungsbeispiel des erfindungsgemäßen Aufbaus eines ASICs und Weiterverarbeitung der Signale des Inertialsensors; und
- Figur 7: und Weiterverarbeitung der Signale des Inertialsensors.

### Ausführungsformen der Erfindung

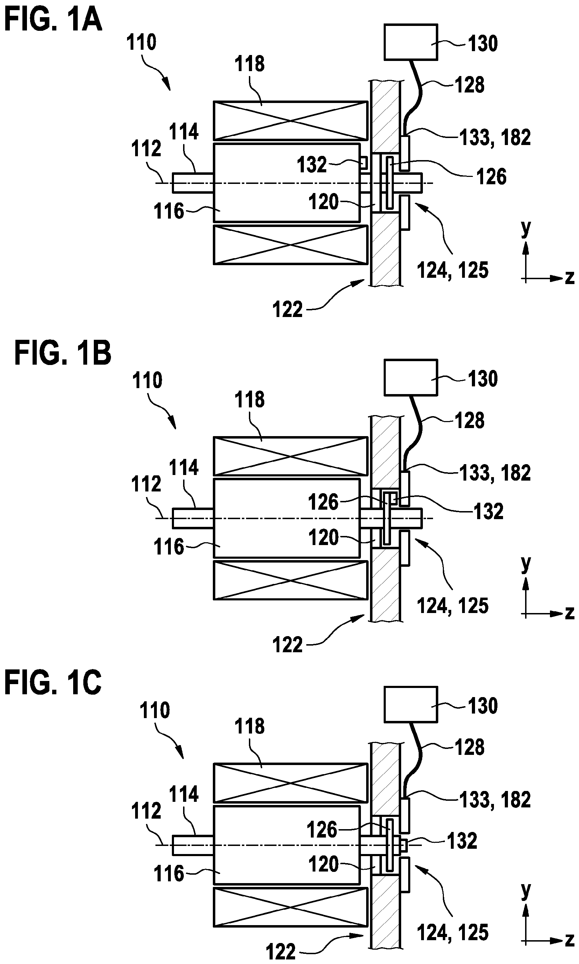

In Figur 1A bis X sind Ausführungsbeispiele eines Sensorsystems 110 zur Bestimmung mindestens einer Rotationseigenschaft eines um mindestens eine Rotationsachse 112 rotierenden Elements 114 gezeigt. Das Sensorsystem 110 kann insbesondere zum Einsatz im Kraftfahrzeug eingerichtet sein. Insbesondere kann das Sensorsystem 110 zur Erfassung mindestens einer Rotationseigenschaft einer Nockenwelle eingerichtet sein. Beispielsweise kann das Sensorsystem 110 eingerichtet sein, eine Winkelposition der Nockenwelle zu erfassen. Dementsprechend kann es sich bei dem rotierenden Element 114 beispielsweise um eine Welle handeln. Im dargestellten Fall einer permanent erregten Synchronmaschine kann die Welle einen Permanentmagneten 116 tragen. Zylinderförmig um diesen Permanentmagneten 116 kann ein Statorspulenpaket 118 angeordnet sein. Ein Abtrieb kann in negativer z-Richtung angeordnet sein und ist nicht weiter dargestellt. Auf der dem Abtrieb entgegengesetzten Seite kann ein B-Lager 120 angeordnet sein, welches die Achse 114 aufnimmt. Das Sensorsystem 110 weist mindestens einen induktiven Positionssensor auf 124. Der induktive Positionssensor 124 kann mindestens einen Schaltungsträger 125 umfassen. Der Schaltungsträger 125 kann beispielsweise eine Leiterplatte aufweisen, welche im Wesentlichen kreisringförmig das rotierende Element 114 umläuft und dabei bevorzugt einen Winkelbereich von 360° abdeckt. Das B-Lager 120 kann mit einem B-Lagerschild 122 verbunden sein, welches den induktiven Positionssensor 124 hält. Das Sensorsystem 110 weist mindestens ein mit dem rotierenden Element 114 verbindbares Geberrad 126 auf. Zwischen B-Lager 120 und induktiven Positionssensor 124 kann das Geberrad 126 angeordnet sein, welches mit der Welle verbunden ist und sich mit dieser mit dreht. Der induktive Positionssensor 124 kann eine Verpackung aufweisen. Die Verpackung kann erlauben, den induktiven Positionssensor 124 mit einem Spanschutz zu versehen und eine ausreichend hohe mechanische Festigkeit zu gewährleisten. Die Verpackung kann durch eines oder mehrere der Verfahren Direct-injection-molding, Transfermolden mit Duroplast, Thermoplastspritzen oder durch Vergießen realisiert werden. Die Verpackung kann alle Komponenten des induktiven Positionssensors 124 ganz oder teilweise umgeben. Die Verpackung kann mindestens ein Verbindungselement, bevorzugt Bohrungen und/oder Aussparungen, aufweisen, durch die der induktive Positionssensor 124, beispielsweise mit einer Schraubverbindung am B-Lagerschild 122 befestigt werden kann. Alternativ oder zusätzlich kann der induktive Positionssensor 124 auch mit Clips, einer Klebverbindung oder weiteren Verfahren am B-Lagerschild 122 angebracht werden. Grundsätzlich kann der Aufbau auch auf der anderen Seite angebracht sein (A-Lager). Das Sensorsystem 110 weist mindestens eine zweite Auswerteeinheit 130 auf. Beispielsweise über ein Kabel 128 kann der induktive Positionssensor 124 mit der zweiten Auswerteeinheit 130 verbunden sein. Die zweite Auswerteeinheit 130 kann eine Spannungsversorgung des induktiven Positionssensors 124 bereitstellen. Die zweite Auswerteeinheit 130 kann Ausgangssignale des induktiven Positionssensors 124 empfangen und aus diesen eine Rotorposition und Rotortemperatur berechnen.

Das Sensorsystem 110 weist mindestens einen Inertialsensor 132 auf. Verschiedene Integrationskonzepte zur Integration des Inertialsensors 132 in die Maschine sind denkbar. Figur 1A zeigt eine Ausführungsform, bei welcher der Inertialsensor 132 direkt am Permanentmagnet 116 angebracht ist. Aufgrund einer Schirmwirkung des B-Lagers 120 kann eine, bevorzugt induktiv ausgeführte, Energie- und Signalübertragung nicht direkt durch und zu dem induktiven Positionssensor 124 erfolgen. Das Sensorystem 110 kann in diesem Fall weitere, nicht dargestelle, Elemente aufweisen, die zum Beispiel im B-Lager 120 integriert sind, welches eine Verbindung zwischen diesen Elementen und dem induktiven Positionssensor 124 herstellt. Es kann davon ausgegangen werden, dass die Rotortemperatur identisch zur Temperatur des Geberrads 126 oder der Welle ist. Figur 1B zeigt eine Ausführungsform, bei welcher der Inertialsensor 132 an dem Geberrad 126 angeordnet ist. Figur 1C zeigt eine Ausführungsform, bei welcher der Inertialsensor 132 an der Welle angeordnet ist. Hier können die drahtlose Energieversorgung sowie Signalübertragung direkt durch den induktiven Positionssensor 124 erfolgen. Ebenso sind gemischte Ausführungsformen denkbar, bei welchen beispielsweise alle Komponenten zur Energie- und Signalübertragung auf dem Geberrad 126 angeordnet sind und Sensoren des Inertialsensors 132 auf dem Permanentmagneten 116 angeordnet sind.

Der induktive Positionssensor 124 kann mindestens ein Kontaktelement 133 aufweisen, an welchem das Kabel 128 befestigt werden kann. Das Kontaktelement 133 kann eine Bohrung für Rammkontakte, ein aufgelöteter Stecker oder Pads sein, mit denen das Kabel 128 mit dem Schaltungsträger 125 durch einen Lötprozess verbunden werden kann. Das Sensorsystem 110 kann, neben den in Figuren 1A bis C dargestellten Elementen, weiterhin ein oder mehrere zusätzliche Elemente umfassen, beispielsweise ein oder mehrere in den Figuren nicht dargestellte weitere Funktionselemente, wie beispielsweise Elektroden, Elektrodenzuleitungen und Kontakte, mehrere Schichten, Heizelemente oder andere Elemente.

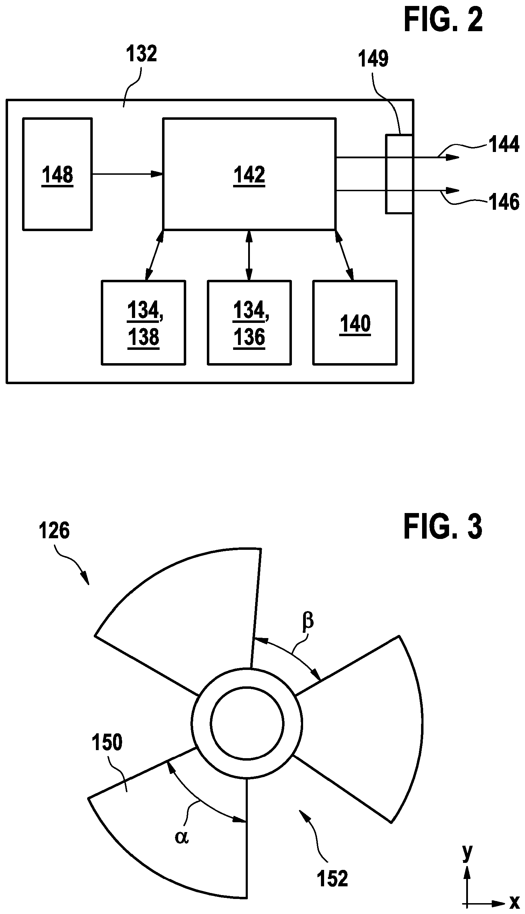

Ein schematischer Aufbau des Intertialsensors 132 zeigt Figur 2. Der Inertialsensor 132 weist mindestens eine Vorrichtung 134 auf, welche eingerichtet ist, um mindestens eine mechanische Größe des rotierenden Elements 114 zu erfassen. Die mechanische Größe kann mindestens eine Größe sein ausgewählt aus der Gruppe bestehend aus: einer Drehzahl; einer Drehrate, insbesondere einer Drehrate um die Rotationssachse 112; einer Beschleunigung, beispielsweise einer Radialbeschleunigung. Die Beschleunigung kann bevorzugt eine Beschleunigung radial zur Drehachse sein, also eine Zentrifugalkraft, oder kann in mehreren Raumrichtungen erfasst werden beispielsweise zur Überwachung der Laufruhe bzw. zur Detektion von Lagerschäden und Erkennung einer Unwucht. Der Inertialsensor 132 kann mindestens einen mikromechanischen Beschleunigungssensor 136 und/oder mindestens einen mikromechanischem Drehratesensor 138 aufweisen.

Der Inertialsensor 132 weist weiterhin mindestens einen Temperatursensor 140 auf, welcher eingerichtet ist, mindestens eine Temperatur des rotierenden Elements 114 zu erfassen. Beispielsweise kann der Temperatursensor 140 eingerichtet sein, um Temperaturen mit mindestens einem mechanischen Kontakt zum Prüfkörper, insbesondere des rotierenden Elements 114 und/oder des Geberrads 126 und/oder des Permanentmagneten 116, zu erfassen. Beispielsweise kann der Temperatursensor 140 eine Änderung eines Widerstands von Metallen oder Halbleiterschichten nutzen. Beispielsweise kann die Erfassung der Temperatur mit PN-Übergängen oder Transistor-Strukturen erfolgen.

Der Inertialsensor weist mindestens eine erste Auswerteeinheit 142 auf, welche eingerichtet ist, mindestens ein erstes Signal 144, welches mindestens eine Information über die erfasste Temperatur aufweist, und mindestens ein zweites Signal 146, welches mindestens eine Information über die erfasste mechanischen Größe aufweist, zu erzeugen. Beispielsweise können zu diesem Zweck eine oder mehrere elektronische Verbindungen zwischen der Vorrichtung 134 zur Erfassung der mechanischen Größe und der ersten Auswerteeinheit 142 und/oder dem Temperatursensor 140 und der ersten Auswerteeinheit 142 vorgesehen sein. Die erste Auswerteeinheit 142 kann beispielsweise mindestens eine Datenverarbeitungsvorrichtung umfassen, beispielsweise mindestens einen Computer oder Mikrocontroller. Die Datenverarbeitungsvorrichtung kann einen oder mehrere flüchtige und/oder nicht flüchtige Datenspeicher aufweisen, wobei die Datenverarbeitungsvorrichtung beispielsweise programmtechnisch eingerichtet sein kann, um den induktiven Positionssensor 124 anzusteuern. Die Signalauswertung in der ersten Auswerteeinhat 142 kann derart erfolgen, dass die erste Auswerteeinheit 142 alle von dem Temperatursensor 140 und der Vorrichtung 134 zur Erfassung der mechanischen Größe empfangenen Signale auswertet und in zwei Ausgangssignale, also das erste Signal 144 und das zweite Signal 146, wandelt. Das erste Signal 144 kann die Temperatur repräsentieren, während das zweite Signal 146 eine mechanische Größe, beispielsweise die Drehrate, darstellt. Das erste Signal 144 und das zweite Signal 146 können beide analog, beide digital oder eines analog und eines digital sein.

Der Inertialsensor 132 kann mindestens eine Spannungsversorgung 148 aufweisen, welche eingerichtet ist, um die Vorrichtung 134 zur Erfassung der mechanischen Größe und/oder den Temperatursensor 140 mit Spannung zu beaufschlagen. Die Spannungsversorgung 148 kann bevorzugt drahtlos erfolgen, beispielsweise basierend auf RFID (radio-frequency identification) -Techniken und/oder optisch mittels mindestens einer Solarzelle und/oder mittels Energy Harvesting in Folge der Drehbewegung. Alternativ oder zusätzlich kann der Inertialsensor 132 Energiespeicher wie Batterien, Superkondensatoren oder andere Energiequellen aufweisen. Weiterhin kann auch eine Kontaktierung mittels Schleifringen erfolgen. Die Elemente des Inertialsensors 132 können in einem oder in mehreren Chips auf einem oder mehreren Substraten integriert sein. Beispielsweise kann ein Element zur Spannungsversorgung 148 von den anderen Elementen des Inertialsensors 132 getrennt ausgestaltet sein. Ebenso können auch Subkomponenten, beispielsweise Spulen zur induktiven Energie- oder Signalübertragung, von weiteren Subkomponenten getrennt ausgestaltet sein.

Der Intertialsensor 132 weist mindestens eine erste Schnittstelle 149 auf, welche eingerichtet ist, das erste Signal 144 und das zweite Signal 146 drahtlos an den induktiven Positionssensor 124 zu übermitteln, insbesondere zu übertragen.

Ein erfindungsgemäßes Ausführungsbeispiel eines Geberrads 126 ist in Figur 3 dargestellt. Das Geberrad 126 kann rotationssymmetrisch ausgestaltet sein. Das Geberrad 126 kann eine identische Anzahl an elektrisch leitfähigen Flügeln 150 mit einem ersten Öffnungswinkel α und elektrisch nicht oder weniger leitfähigen Flügeln und/oder Aussparungen 152 mit einem zweiten Öffnungswinkel β aufweisen. Eine Summe des ersten und des zweiten Öffnungswinkels kann einem vollen Winkelmessbereich δ des induktiven Positionssensors 124 entsprechen. Der erste und der zweite Öffnungswinkel können identisch oder verschieden groß sein. Bevorzugt kann eine Ausgestaltung mit α = β sein, wobei α dem halben Winkelmessbereich δ entspricht. In einer weiteren Ausführungsform kann α auch kleiner sein, solange die Bedingung α + β = δ erfüllt ist. Der Winkelmessbereich kann mit einer Polpaarzahl der Synchronmaschine p gemäß δ=360°/p korrelieren und für die Anzahl n der elektrisch leitfähigen Flügel 150 kann gelten: n = p = 360°/δ. Die Befestigung des Geberrads 126 an dem rotierenden Element 114 kann über eine Schraub- und/oder Klebverbindung und/oder mit einem Längspressverfahren erfolgen.

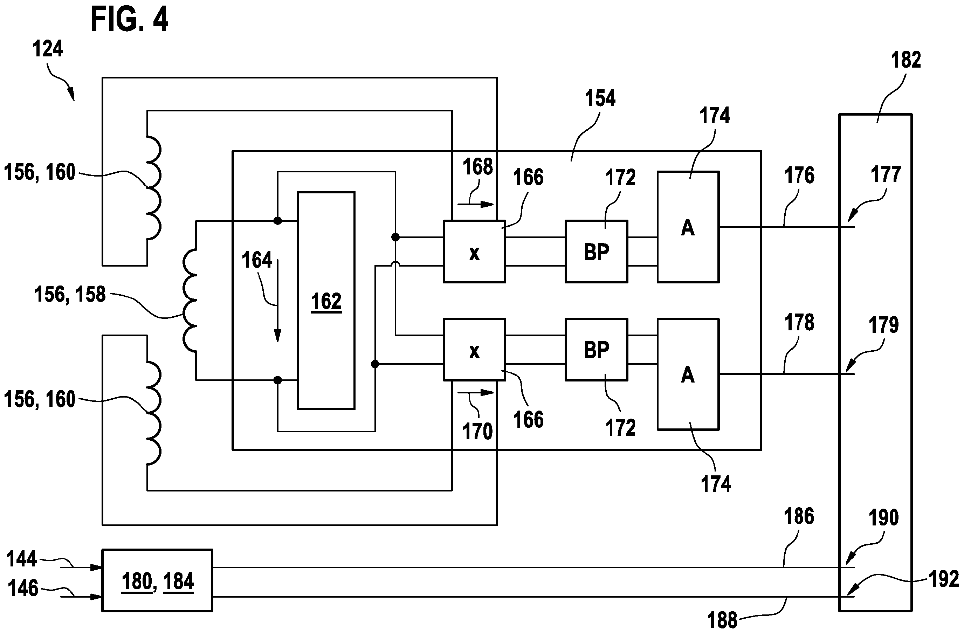

Der induktive Positionssensor 124 kann mindestens eine anwendungsspezifische integrierte Schaltung (ASIC) 154 aufweisen, welche in Figur 4 dargestellt ist. Der induktive Positionssensor 124 kann mindestens eine Spulenanordnung 156 aufweisen, welche auf dem Schaltungsträger 125 angeordnet ist. Die Spulenanordnung 156 kann mindestens eine Erregerspule 158 und mindestens zwei Empfängerspulen 160 aufweisen. Die anwendungsspezifische integrierte Schaltung 154 kann eingerichtet sein, um ein Erregersignal für die Erregerspule 136 bereitzustellen . Die anwendungsspezifische integrierte Schaltung 154 kann eingerichtet sein, um von den Empfängerspulen 160 erzeugte Signale zu verarbeiten und als Ausgangssignale, beispielsweise der zweiten Auswerteeinheit 130, bereitzustellen. Beispielsweise kann das ASIC 154 genau an eine Erregerspule 158 und mindestens zwei Empfängerspulen 160 angeschlossen sein. Mit einem nicht näher dargestellten Block 162 kann ein im Wesentlichen sinusförmiges Erregersignal 164 bereitgestellt werden, welches die Erregerspule 158 speist. Beispielsweise kann es sich bei dem Block 162 um eine Oszillatorschaltung handeln, welche einen LC Oszillator treibt, bei welchen die Erregerspule 158 sowie mindestens ein nicht dargestellter Kondensator als frequenzbestimmende Elemente wirken. Die Amplitude des Erregersignals 164 kann im Bereich von 0,1 V und 10 V, bevorzugt 5 V betragen, bei Frequenzen im Bereich von 1 MHz und 10 MHz, bevorzugt 3,5 MHz.

Die anwendungsspezifische integrierte Schaltung 154 kann eingerichtet sein, um von den Empfängerspulen 160 erzeugte Signale 168, 170 zu verarbeiten. Die awendungsspezifische integrierte Schaltung 154 kann mindestens eine Demodulationsvorrichtung 166 aufweisen, welche eingerichtet ist, um Signale 168, 170 der Empfängerspulen 160 zu demodulieren, insbesondere synchron. Das Demodulieren kann ein Multiplizieren mit dem Erregersignal 164 umfassen. Die anwendungsspezifische integrierte Schaltung 154 kann mindestens einen Tiefpassfilter 172 aufweisen. Der Tiefpassfilter 172 kann eine Grenzfrequenz im Bereich von 50 kHz bis zu 500 kHz, bevorzugt 100 kHz, aufweisen. Beispielsweise kann die anwendungsspezifische integrierte Schaltung 154 zunächst die Signale 168, 170 der Empfängerspulen 160 demodulieren und anschließend mittels des Tiefpasses 172 filtern. Die anwendungsspezifische integrierte Schaltung 154 kann weiter mindestens einen Verstärker 174 aufweisen. Der Verstärker 174 kann die gefilterten Signale verstärken. Die anwendungsspezifische integrierte Schaltung 154 kann eingerichtet sein, um die verarbeiteten Signale als mindestens ein erstes Ausgangssignal 176 an mindestens einem ersten Ausgang 177 und mindestens ein zweites Ausgangssignal 178 an mindestens einem zweiten Ausgang 179 bereitzustellen. Das erste Ausgangssignal 176 und das zweite Ausgangssignal 178 können über das Kabel 128 an die zweite Auswerteeinheit 130 übertragen werden.

Wie oben ausgeführt, weist der Intertialsensor mindestens eine erste Schnittstelle 149 auf, welche eingerichtet ist, das erste Signal 144 und das zweite Signal 146 drahtlos an den induktiven Positionssensor 124 zu übermitteln, insbesondere zu übertragen. Der induktive Positionssensor 124 weist mindestens eine zweite Schnittstelle 180 auf, welche eingerichtet ist, das erste Signal 144 und das zweite Signal 146 zu empfangen. Die erste Schnittstelle 149 und die zweite Schnittstelle 180 können als Schnittstellen für eine drahtlose Kommunikation, insbesondere eine drahtlose Datenübertragung und/oder Signalübertragung, ausgestaltet sein. Das erste Signal 144 und das zweite Signal 146 können von dem Inertialsensor 132 über verschiedene Schnittstellen übermittelt werden oder über eine gemeinsame Schnittstelle. Zur Signal- und/oder Datenübertagung kann beispielsweise kann ein SENT- Protokoll eingesetzt werden und das erste Signal 144 beispielsweise über einen Slowchannel übertragen werden. Für mögliche Methoden der drahtlosen Übertragung kann auf die obigen Optionen verwiesen werden, die einzeln oder auch in Kombination eingesetzt werden können.

Der induktive Positionssensor weist mindestens eine dritte Schnittstelle 182 auf, welche eingerichtet ist, das erste Signal 144 und das zweite Signal 146 sowie die Information über die Rotationseigenschaft, als die Ausgangssignale 176 und 178, an die zweite Auswerteeinheit 130 zu übermitteln, beispielsweise über mindestens eine elektrische Signalleitung, insbesondere das Kabel 128. Der induktive Positionssensor 124 kann mindestens eine Signalverarbeitungseinheit 184 aufweisen, welche eingerichtet ist, das erste Signal 144 und das zweite Signal 146 zu verarbeiten. Die Signalverarbeitungseinheit 184 kann mindestens einen Datenspeicher aufweisen. Die Signalverarbeitungseinheit 184 kann mindestens einen Prozessor aufweisen. Die Signalverarbeitungseinheit 184 kann mindestens eine elektrische Schaltung zur Signalverarbeitung aufweisen. Die Signalverarbeitungseinheit 184 kann mindestens einen Verstärker und/oder mindestens einen Filter und/oder mindestens einen Dividierer und/oder mindestens einen Multiplizierer und/oder mindestens einen Addierer aufweisen. Das Verarbeiten des ersten Signals 144 und des zweiten Signals 146 kann mindestens eine Maßnahme umfassen ausgewählt aus der Gruppe bestehend aus: ein Erzeugen von einem dritten Ausgangssignal 186 und einem vierten Ausgangssignal 188; ein Bestimmen einer Information über eine Drehrichtung; ein Bestimmen einer Information über eine Drehzahl; ein Bestimmen einer binären Information über eine Überschreitung eines vorbestimmten und/oder vorgegebenen Grenzwerts einer Beschleunigung und/oder Drehzahl. Die Signalverarbeitungseinheit 184 kann eingerichtet sein, das dritte Ausgangssignal 186 und vierte Ausgangssignal 188 an einen dritten Ausgang 190 und einen vierten Ausgang 192 des induktiven Positionssensors 124 bereitzustellen.

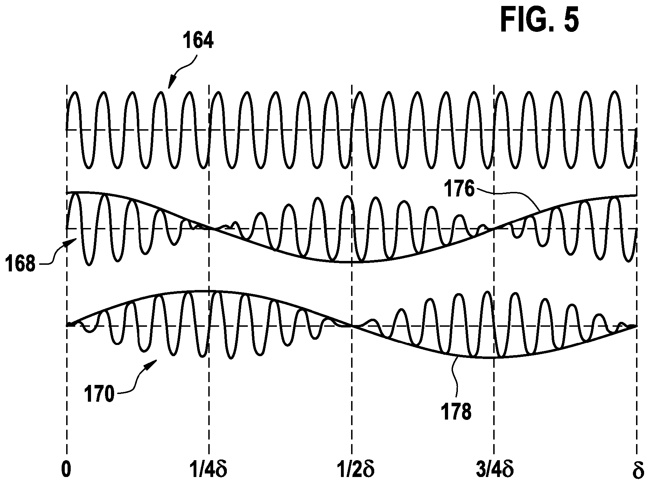

Beispielhafte Signalverläufe als Funktion des Drehwinkels für eine kontinuierliche Drehbewegung sind in Figur 5 dargestellt. Bei erfindungsgemäßer Ausgestaltung der Empfängerspulen 160 sowie des Geberrads 126 ergeben sich als Funktion des Drehwinkels ein demoduliertes sinusförmiges Signal 178 sowie ein demoduliertes cosinusförmiges Signal 176. In der zweiten Auswerteeinheit 130 können die Signale 176, 178 digitalisiert werden und durch anschließende Berechnung eines Arkustangens in den Drehwinkel umgerechnet werden.

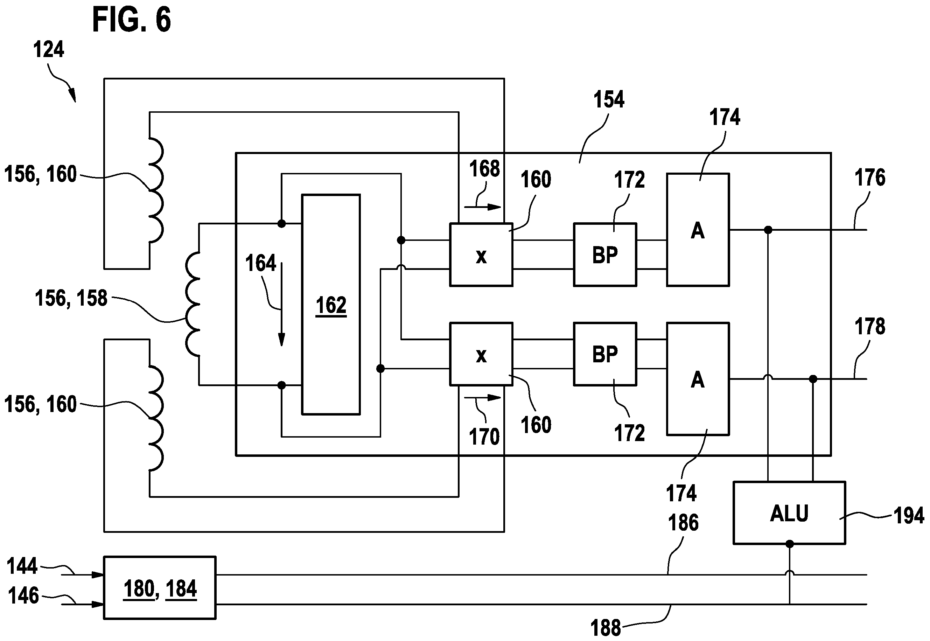

Figur 6 zeigt eine Ausführungform, bei welcher der induktive Positionssensor 124 mindestens eine Recheneinheit 194 aufweist, welche eingerichtet ist, um aus dem zweiten Signal 146 eine Information über eine zukünftige Rotationsseigenschaft des um die Rotationsachse 112 rotierenden Elements 114 zu bestimmen. Die zukünftige Rotationseigenschaft kann eine Rotationseigenschaft eines zeitlich auf einen ersten Messwert folgenden zweiten Messwerts des induktiven Positionssensors 124 sein, also beispielsweise die nächste mit dem induktiven Positionssensor 124 erfasste Information über die Rotationseigenschaft. Beispielsweise kann das zweite Signal 146 ein Drehratesignal sein, welches zur Plausibilisierung der mit dem induktiven Positionssensor 124 erfassten Drehwinkelinformation genutzt werden kann. Eine direkt gemessene Rotordrehzahl kann zur Plausibilisierung von zeitlich aufeinander folgenden Rotorpositionsmessungen verwendet werden. So kann ein plausibilisierter nächsten Messwert α_{neu,plau} des jeweils nächsten Messwerts αₙₑᵤ des induktiven Positionssensors zu einem vorhergehenden Messwert αₐₗₜ des induktiven Positionssensors 124 mit einer Integration der Drehrate R(t) bestimmt werden: α_{neu,plau} = 0,5*αₙₑᵤ + 0,5*(αₐₗₜ + R(t) *Δt), wobei t die Zeit ist.

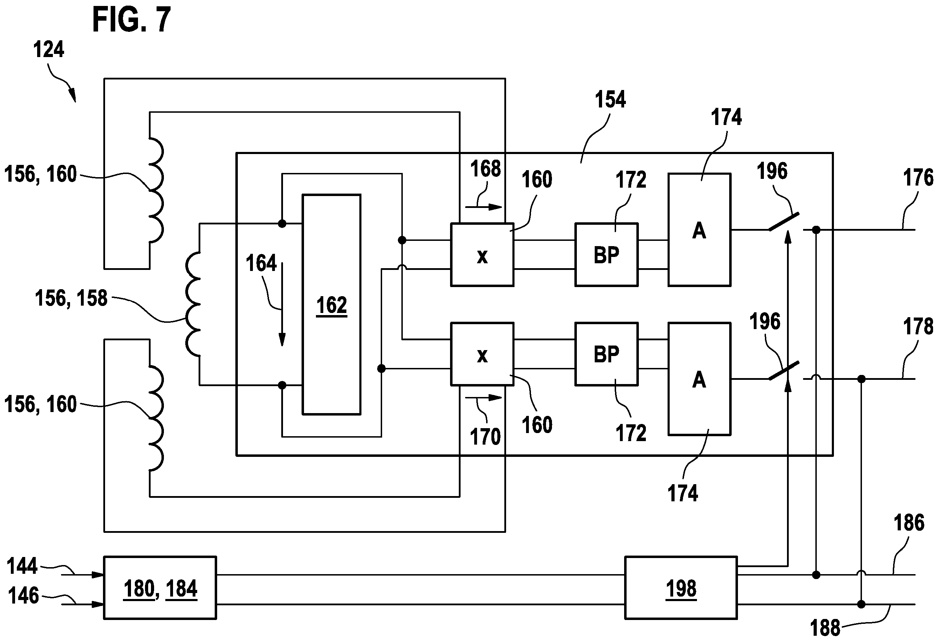

Alternativ oder zusätzlich zu einer Signalverarbeitung des ersten Signals 144 und zweiten Signals 146 in dem induktiven Positionssensor 124 kann eine Vorverarbeitung bereits im Temperatursensor 140 oder Inertialsensor 132 selbst und/oder aber in der zweiten Auswerteeinheit 130 erfolgen. Wie in Figur 7 gezeigt, kann die anwendungsspezifische integrierte Schaltung 154 mindestens ein Schaltelement 196 aufweisen. Der induktive Positionssensor 124 kann mindestens eine Steuereinheit 198 aufweisen, welche eingerichtet ist, um das Schaltelement196 zu steuern, derart dass bei einem Fehlerfall eine Signalkette der anwendungsspezifischen integrierten Schaltung 154 zu dem ersten und dem zweiten Ausgang 177, 179 unterbrochen wird und der erste und der zweite Ausgang 177, 179 mit mindestens einem Fehlersignal überschrieben werden. Das Schaltelement 196 kann insbesondere einen Schalter aufweisen. Um im Fehlerfall, beispielsweise ein Durchgehen des Motors, also der unkontrollierbaren Erhöhung der Drehzahl, schnell reagieren zu können, kann es vorteilhaft sein, eine Signalverarbeitung nicht erst in der zweiten Auswerteeinheit 130 vorzunehmen. So kann es möglich sein, bei Erkennen eines Fehlerfalles ein "Interrupt" über die Ausgangssignale 176, 178 des induktiven Positionssensors 124 vorzunehmen.Die Steuereinheit 198 kann eingerichtet sein, das Schaltelement 196 anzusteuern und im Fehlerfall über das Schaltelement 196 die Signalkette des induktiven Positionssensors 124 zu unterbrechen und die ersten und zweiten Ausgänge 177, 179 jeweils mit dem mindestens einen Fehlersignal zu überschreiben. Das Fehlersignal kann dafür Werte annehmen, welche nicht im ansonsten gültigen Signalbereich der Signale der üblichen ersten und zweiten Ausgangsignale 176, 178 des ASICs 154, liegen. Beispielsweise kann das Fehlersignal für den ersten und den zweiten Ausgang 177, 179 identische Werte annehmen, welche entweder maximal oder minimal sind, bezogen auf den verfügbaren Spannungshub. In diesem Fall ist die sonst gültige trigonometrische Beziehung sin²+cos²=1 nicht mehr gültig und die zweite Auswerteeinheit 130 kann die Maschine in einen sicheren Zustand, z.B. einen aktiven Kurzschluss, versetzen. So kann eine die funktionale Sicherheit signifikant erhöht werden. Grundsätzlich sind auch Mischformen der beschriebenen Ausführungsformen umsetzbar. Es ist beispielsweise denkbar, dass die Temperatur über eine Schnittstelle zur zweiten Auswerteeinheit 130 gesendet wird, während die mechanische Größe vorverarbeitet wird und nur bei Eintreten einer bestimmten Bedingung die Signale des induktiven Positionssensors 124 überschreibt.

## Patentansprüche

1. Sensorsystem (110) zur Bestimmung einer Temperatur und mindestens einer Rotationseigenschaft eines um mindestens eine Rotationsachse (112) rotierenden Elements (114) umfassend:
i) mindestens einen Inertialsensor (132), wobei der Inertialsensor (132) mindestens eine Vorrichtung (134) aufweist, welche eingerichtet ist, um mindestens eine mechanische Größe des rotierenden Elements (114) zu erfassen, wobei der Inertialsensor (132) weiterhin mindestens einen Temperatursensor (140) aufweist, welcher eingerichtet ist, mindestens eine Temperatur des rotierenden Elements (114) zu erfassen, wobei der Inertialsensor (132) mindestens eine erste Auswerteeinheit (142) aufweist, welche eingerichtet ist, mindestens ein erstes Signal (144), welches mindestens eine Information über die erfasste Temperatur aufweist, und mindestens ein zweites Signal (146), welches mindestens eine Information über die erfasste mechanischen Größe aufweist, zu erzeugen;
ii) mindestens einen induktiven Positionssensor (124), welcher eingerichtet ist zur Erfassung mindestens einer Information über die Rotationseigenschaft des rotierenden Elements (114);
iii) mindestens eine zweite Auswerteeinheit (130);
**dadurch gekennzeichnet, dass**
der Intertialsensor (132) mindestens eine erste Schnittstelle (149) aufweist, welche eingerichtet ist, das erste Signal (144) und das zweite Signal (146) drahtlos an den induktiven Positionssensor (124) zu übermitteln, wobei der induktive Positionssensor (124) mindestens eine zweite Schnittstelle (180) aufweist, welche eingerichtet ist, das erste Signal (144) und das zweite Signal (146) zu empfangen, wobei der induktive Positionssensor (124) mindestens eine dritte Schnittstelle (182) aufweist, welche eingerichtet ist, das erste Signal (144) und das zweite Signal (146) sowie die Information über die Rotationseigenschaft an die zweite Auswerteeinheit (130) zu übermitteln.

2. Sensorsystem (110) nach dem vorhergehenden Anspruch,wobei der induktive Positionssensor (124) mindestens einen Schaltungsträger (125) aufweist, wobei der induktive Positionssensor (124) mindestens eine Spulenanordnung (156) aufweist, welche auf dem Schaltungsträger (125) angeordnet ist, wobei die Spulenanordnung (156) mindestens eine Erregerspule (158) und mindestens zwei Empfängerspulen (160) umfasst.

3. Sensorsystem (110) nach dem vorhergehenden Anspruch, wobei der induktive Positionssensor (124) mindestens eine anwendungsspezifische integrierte Schaltung (ASIC) (154) aufweist, welche auf dem Schaltungsträger (125) angeordnet ist, wobei die anwendungsspezifische integrierte Schaltung (154) eingerichtet ist, um die von den Empfängerspulen (160) erzeugten Signale (168, 170) zu verarbeiten und als mindestens ein erstes Ausgangssignal (176) an mindestens einen ersten Ausgang (177) und als mindestens ein zweites Ausgangssignal (178) an mindestens einen zweiten Ausgang (179) bereitzustellen.

4. Sensorsystem (110) nach dem vorhergehenden Anspruch, wobei der induktive Positionssensor (124) eingerichtet ist, das erste und das zweite Ausgangssignal (176, 178) an die zweite Auswerteeinheit (130) zu übermitteln.

5. Sensorsystem (110) nach einem der zwei vorhergehenden Ansprüche, wobei die anwendungsspezifische integrierte Schaltung (154) mindestens ein Schaltelement (196) aufweist, wobei der induktive Positionssensor (124) mindestens eine Steuereinheit (198) aufweist, welche eingerichtet ist, um das Schaltelement (196) zu steuern, derart dass bei einem Fehlerfall eine Signalkette der anwendungsspezifischen integrieten Schaltung (154) zu dem ersten und dem zweiten Ausgang (177, 179) unterbrochen wird und der erste und der zweite Ausgang (177, 179) mit mindestens einem Fehlersignal überschrieben werden.

6. Sensorsystem (110) nach einem der drei vorhergehenden Ansprüche, wobei die anwendungsspezifische integrierte Schaltung (154) eingerichtet ist, um ein Erregersignal (164) für die Erregerspule (158) bereitzustellen, wobei das Erregersignal (164) ein im Wesentlichen sinusförmiges Erregersignal ist, wobei das Erregersignal (164) eine Amplitude im Bereich von 0,1 V bis 10 V aufweist, wobei das Erregersignal (164) eine Frequenz im Bereich von 1 MHz bis 10 MHz aufweist.

7. Sensorsystem (110) nach einem der vier vorhergehenden Ansprüche, wobei die anwendungsspezifische integrierte Schaltung (154) mindestens eine Demodulationsvorrichtung (166) aufweist, welche eingerichtet ist, um die Signale (168, 170) der Empfängerspulen (160) zu demodulieren, wobei das Demodulieren ein Multiplizieren mit dem Erregersignal (164) umfasst.

8. Sensorsystem (110) nach einem der fünf vorhergehenden Ansprüche, wobei die anwendungsspezifische integrierte Schaltung (154) mindestens einen Tiefpassfilter (172) aufweist, wobei der Tiefpassfilter (172) eine Grenzfrequenz im Bereich von 50 kHz bis zu 500 kHz aufweist.

9. Sensorsystem (110) nach einem der vorhergehenden Ansprüche, wobei der induktive Positionssensor (124) mindestens eine Signalverarbeitungseinheit (184) aufweist, welche eingerichtet ist, das erste Signal (144) und das zweite Signal (146) zu verarbeiten, wobei das Verarbeiten des ersten Signals (144) und des zweiten Signals (146) mindestens eine Maßnahme umfasst ausgewählt aus der Gruppe bestehen aus: ein Erzeugen von einem dritten und einem vierten Aussganssignal; ein Bestimmen einer Information über eine Drehrichtung; ein Bestimmen einer Information über eine Drehzahl; ein Bestimmen einer binären Information über eine Überschreitung eines vorbestimmten und/oder vorgegebenen Grenzwerts einer Beschleunigung und/oder Drehzahl.

10. Sensorsystem (110) nach einem der vorhergehenden Ansprüche, wobei der induktive Positionssensor (132) mindestens eine Recheneinheit (194) aufweist, welche eingerichtet ist, um aus dem zweiten Signal (146) eine Information über eine zukünftige Rotationsseigenschaft rotierenden Elements (114) zu bestimmen.

11. Sensorsystem (110) nach einem der vorhergehenden Ansprüche, wobei die mechanische Größe mindestens eine Größe ist ausgewählt aus der Gruppe bestehend aus: einer Drehzahl; einer Drehrate, insbesondere einer Drehrate um die Rotationssachse (112); einer Beschleunigung, beispielsweise einer Radialbeschleunigung.

12. Sensorsystem(110) nach einem der vorhergehenden Ansprüche, wobei der Inertialsensor (132) mindestens einen mikromechanischen Beschleunigungssensor (136) und/oder mindestens einen mikromechanischem Drehratesensor (138) aufweist.

13. Sensorsystem (110) nach einem der vorhergehenden Ansprüche, wobei der induktive Positionssensor (124) ein induktiver Rotorlagesensor ist.

14. Sensorsystem (110) nach einem der vorhergehenden Ansprüche, wobei das Sensorsystem (110) mindestens ein mit dem um die Rotationsachse (112) rotierenden Element (114) verbindbares Geberrad (126) aufweist.

15. Verfahren zur Bestimmung mindestens einer Temperatur und einer Rotationseigenschaft eines um mindestens eine Rotationsachse (112) rotierenden Elements (114), wobei das Verfahren die Verwendung mindestens eines Sensorsystems (110) nach einem der vorhergehenden Ansprüche umfasst, wobei das Verfahren weiterhin folgende Schritte umfasst:
- Erfassen mindestens einer mechanischen Größe des rotierenden Elements (114) mit einer Vorrichtung (134) mindestens eines Inertialsensors (132) und Erfassen mindestens einer Temperatur des rotierenden Elements (114) mit mindestens einem Temperatursensor (140) des Inertialsensors (132);
- Erzeugen mindestens eines ersten Signals (144), welches mindestens eine Information über die erfasste Temperatur aufweist, und mindestens eines zweiten Signals (146), welches mindestens eine Information über die erfasste mechanische Größe aufweist, mit mindestens einer ersten Auswerteeinheit (142) des Inertialsensors (132);
- Erfassen mindestens einer Information über eine Rotationseigenschaft des rotierenden Elements (114) mit mindestens einem induktiven Positionssensor (124);
- drahtloses Übermitteln des erstens Signals (144) und des zweiten Signals (146) mit mindestens einer ersten Schnittstelle (149) des Inertialsensors (132) an den induktiven Positionssensor (124) und Empfangen des ersten Signals (144) und des zweiten Signals (146) mit mindestens einer zweiten Schnittstelle (180) des induktiven Positionssensors (124);
- Übermitteln des ersten Signals (144) und des zweiten Signals (146) und erfassten Rotationseigenschaft von dem induktiven Positionssensor (124) an mindestens eine zweite Auswerteeinheit (139) des Sensorsystems (110) und Auswertung der Information über die erfasste Rotationseigenschaft und des ersten Signals (144) und des zweiten Signals (146) und Ermittlung der Rotationseigenschaft und der Temperatur des rotierenden Elements (110).

## Claims

1. Sensor system (110) for determining a temperature and at least one rotation property of an element (114) rotating about at least one axis of rotation (112), comprising:
i) at least one inertial sensor (132), wherein the inertial sensor (132) has at least one device (134) which is configured to record at least one mechanical variable of the rotating element (114), wherein the inertial sensor (132) also has at least one temperature sensor (140) which is configured to record at least one temperature of the rotating element (114), wherein the inertial sensor (132) has at least one first evaluation unit (142) which is configured to generate at least one first signal (144), which has at least one item of information relating to the recorded temperature, and at least one second signal (146), which has at least one item of information relating to the recorded mechanical variable;
ii) at least one inductive position sensor (124) which is configured to record at least one item of information relating to the rotation property of the rotating element (114);
iii) at least one second evaluation unit (130);
**characterized in that**
the inertial sensor (132) has at least one first interface (149) which is configured to wirelessly transmit the first signal (144) and the second signal (146) to the inductive position sensor (124), wherein the inductive position sensor (124) has at least one second interface (180) which is configured to receive the first signal (144) and the second signal (146), wherein the inductive position sensor (124) has at least one third interface (182) which is configured to transmit the first signal (144) and the second signal (146) and also the information relating to the rotation property to the second evaluation unit (130).

2. Sensor system (110) according to the preceding claim, wherein the inductive position sensor (124) has at least one circuit carrier (125), wherein the inductive position sensor (124) has at least one coil arrangement (156) which is arranged on the circuit carrier (125), wherein the coil arrangement (156) comprises at least one excitation coil (158) and at least two receiver coils (160).

3. Sensor system (110) according to the preceding claim, wherein the inductive position sensor (124) has at least one application-specific integrated circuit (ASIC) (154) which is arranged on the circuit carrier (125), wherein the application-specific integrated circuit (154) is configured to process the signals (168, 170) generated by the receiver coils (160) and to make them available to at least one first output (177) as at least one first output signal (176) and to at least one second output (179) as at least one second output signal (178).

4. Sensor system (110) according to the preceding claim, wherein the inductive position sensor (124) is configured to transmit the first and second output signals (176, 178) to the second evaluation unit (130).

5. Sensor system (110) according to one of the two preceding claims, wherein the application-specific integrated circuit (154) has at least one switching element (196), wherein the inductive position sensor (124) has at least one control unit (198) which is configured to control the switching element (196) in such a manner that, in the event of a fault, a signal chain of the application-specific integrated circuit (154) to the first and second outputs (177, 179) is interrupted and the first and second outputs (177, 179) are overwritten with at least one fault signal.

6. Sensor system (110) according to one of the three preceding claims, wherein the application-specific integrated circuit (154) is configured to provide an excitation signal (164) for the excitation coil (158), wherein the excitation signal (164) is a substantially sinusoidal excitation signal, wherein the excitation signal (164) has an amplitude in the range of 0.1 V to 10 V, wherein the excitation signal (164) has a frequency in the range of 1 MHz to 10 MHz.

7. Sensor system (110) according to one of the four preceding claims, wherein the application-specific integrated circuit (154) has at least one demodulation device (166) which is configured to demodulate the signals (168, 170) from the receiver coils (160), wherein the demodulation comprises multiplication by the excitation signal (164).

8. Sensor system (110) according to one of the five preceding claims, wherein the application-specific integrated circuit (154) has at least one low-pass filter (172), wherein the low-pass filter (172) has a cut-off frequency in the range of 50 kHz to 500 kHz.

9. Sensor system (110) according to one of the preceding claims, wherein the inductive position sensor (124) has at least one signal processing unit (184) which is configured to process the first signal (144) and the second signal (146), wherein the processing of the first signal (144) and of the second signal (146) comprises at least one measure selected from the group consisting of: generating a third and a fourth output signal; determining an item of information relating to a direction of rotation; determining an item of information relating to a rotational speed; determining an item of binary information relating to the exceeding of a predetermined and/or predefined limit value of an acceleration and/or rotational speed.

10. Sensor system (110) according to one of the preceding claims, wherein the inductive position sensor (132) has at least one computing unit (194) which is configured to determine an item of information relating to a future rotation property of the rotating element (114) from the second signal (146).

11. Sensor system (110) according to one of the preceding claims, wherein the mechanical variable is at least one variable selected from the group consisting of: a rotational speed; a rate of rotation, in particular a rate of rotation about the axis of rotation (112); an acceleration, for example a radial acceleration.

12. Sensor system (110) according to one of the preceding claims, wherein the inertial sensor (132) has at least one micromechanical acceleration sensor (136) and/or at least one micromechanical rate-of-rotation sensor (138).

13. Sensor system (110) according to one of the preceding claims, wherein the inductive position sensor (124) is an inductive rotor position sensor.

14. Sensor system (110) according to one of the preceding claims, wherein the sensor system (110) has at least one encoder wheel (126) which can be connected to the element (114) rotating about the axis of rotation (112).

15. Method for determining at least one temperature and one rotation property of an element (114) rotating about at least one axis of rotation (112), wherein the method comprises the use of at least one sensor system (110) according to one of the preceding claims, wherein the method also comprises the following steps of:
- recording at least one mechanical variable of the rotating element (114) using a device (134) of at least one inertial sensor (132) and recording at least one temperature of the rotating element (114) using at least one temperature sensor (140) of the inertial sensor (132);
- generating at least one first signal (144), which has at least one item of information relating to the recorded temperature, and at least one second signal (146), which has at least one item of information relating to the recorded mechanical variable, using at least one first evaluation unit (142) of the inertial sensor (132);
- recording at least one item of information relating to a rotation property of the rotating element (114) using at least one inductive position sensor (124);
- wirelessly transmitting the first signal (144) and the second signal (146) to the inductive position sensor (124) using at least one first interface (149) of the inertial sensor (132) and receiving the first signal (144) and the second signal (146) using at least one second interface (180) of the inductive position sensor (124);
- transmitting the first signal (144) and the second signal (146) and the recorded rotation property from the inductive position sensor (124) to at least one second evaluation unit (139) of the sensor system (110) and evaluating the information relating to the recorded rotation property and the first signal (144) and the second signal (146) and determining the rotation property and the temperature of the rotating element (110).

## Revendications

1. Système de capteurs (110) permettant de déterminer une température et au moins une propriété de rotation d'un élément (114) en rotation sur au moins un axe de rotation (112), comprenant :
i) au moins un capteur inertiel (132), le capteur inertiel (132) présentant au moins un dispositif (134) qui est conçu pour détecter au moins une grandeur mécanique de l'élément rotatif (114), le capteur inertiel (132) présentant en outre au moins un capteur de température (140) qui est conçu pour détecter au moins une température de l'élément rotatif (114), le capteur inertiel (132) présentant au moins une première unité d'évaluation (142) qui est conçue pour générer au moins un premier signal (144) qui présente au moins une information relative à la température détectée et au moins un deuxième signal (146) qui présente au moins une information relative à la grandeur mécanique détectée ;
ii) au moins un capteur de position inductif (124) qui est conçu pour détecter au moins une information relative à la propriété de rotation de l'élément rotatif (114) ;
iii) au moins une deuxième unité d'évaluation (130) ;
**caractérisé en ce que** le capteur inertiel (132) présente au moins une première interface (149) qui est conçue pour transmettre sans fil le premier signal (144) et le deuxième signal (146) au capteur de position inductif (124), le capteur de position inductif (124) présentant au moins une deuxième interface (180) qui est conçue pour recevoir le premier signal (144) et le deuxième signal (146), le capteur de position inductif (124) présentant au moins une troisième interface (182) qui est conçue pour transmettre à la deuxième unité d'évaluation (130) le premier signal (144) et le deuxième signal (146) ainsi que les informations relatives à la propriété de rotation.

2. Système de capteurs (110) selon la revendication précédente, dans lequel le capteur de position inductif (124) présente au moins un support de circuit (125), le capteur de position inductif (124) présentant au moins un agencement de bobines (156) qui est disposé sur le support de circuit (125), l'agencement de bobines (156) comprenant au moins une bobine d'excitation (158) et au moins deux bobines réceptrices (160).

3. Système de capteurs (110) selon la revendication précédente, dans lequel le capteur de position inductif (124) présente au moins un circuit intégré spécifique à une application (ASIC) (154) qui est disposé sur le support de circuit (125), le circuit intégré spécifique à une application (154) étant conçu pour traiter les signaux (168, 170) générés par les bobines réceptrices (160) et pour les fournir comme au moins un premier signal de sortie (176) à au moins une première sortie (177) et comme au moins un deuxième signal de sortie (178) à au moins une deuxième sortie (179).

4. Système de capteurs (110) selon la revendication précédente, dans lequel le capteur de position inductif (124) est conçu pour transmettre le premier et le deuxième signal de sortie (176, 178) à la deuxième unité d'évaluation (130).

5. Système de capteurs (110) selon l'une des deux revendications précédentes, dans lequel le circuit intégré spécifique à une application (154) présente au moins un élément de commutation (196), le capteur de position inductif (124) présentant au moins une unité de commande (198) qui est conçue pour commander l'élément de commutation (196) de telle sorte qu'en cas d'erreur, une chaîne de signaux du circuit intégré spécifique à une application (154) allant à la première et la deuxième sortie (177, 179) est interrompue et la première et la deuxième sortie (177, 179) sont réécrites avec au moins un signal d'erreur.

6. Système de capteurs (110) selon l'une des trois revendications précédentes, dans lequel le circuit intégré spécifique à une application (154) est conçu pour fournir un signal d'excitation (164) destiné à la bobine d'excitation (158), le signal d'excitation (164) étant un signal d'excitation substantiellement sinusoïdal, le signal d'excitation (164) présentant une amplitude dans la plage de 0,1 V à 10 V, le signal d'excitation (164) présentant une fréquence dans la plage de 1 MHz à 10 MHz.

7. Système de capteurs (110) selon l'une des quatre revendications précédentes, dans lequel le circuit intégré spécifique à une application (154) présente au moins un dispositif de démodulation (166) qui est conçu pour démoduler les signaux (168, 170) des bobines réceptrices (160), la démodulation comprenant une multiplication par le signal d'excitation (164).

8. Système de capteurs (110) selon l'une des cinq revendications précédentes, dans lequel le circuit intégré spécifique à une application (154) présente au moins un filtre passe-bas (172), le filtre passe-bas (172) présentant une fréquence limite dans la plage de 50 kHz à 500 kHz.

9. Système de capteurs (110) selon l'une quelconque des revendications précédentes, dans lequel le capteur de position inductif (124) présente au moins une unité de traitement de signal (184) qui est conçu pour traiter le premier signal (144) et le deuxième signal (146), le traitement du premier signal (144) et du deuxième signal (146) comprenant au moins une mesure sélectionnée dans le groupe composé : d'une génération d'un troisième et d'un quatrième signal de sortie ; d'une détermination d'une information relative à un sens de rotation ; d'une détermination d'une information relative à une vitesse de rotation ; d'une détermination d'une information binaire relative à un dépassement d'une valeur limite prédéterminée et/ou prédéfinie d'une accélération et/ou d'une vitesse de rotation.

10. Système de capteurs (110) selon l'une quelconque des revendications précédentes, dans lequel le capteur de position inductif (132) présente au moins une unité de calcul (194) qui est conçue pour déterminer à partir du deuxième signal (146) une information relative à une propriété de rotation future de l'élément rotatif (114) .

11. Système de capteurs (110) selon l'une quelconque des revendications précédentes, dans lequel la grandeur mécanique est au moins une grandeur sélectionnée dans le groupe composé : d'une vitesse de rotation ; d'un taux de rotation, en particulier d'un taux de rotation sur l'axe de rotation (112) ; d'une accélération, par exemple d'une accélération radiale.

12. Système de capteurs(110) selon l'une quelconque des revendications précédentes, dans lequel le capteur inertiel (132) présente au moins un capteur d'accélération micromécanique (136) et/ou au moins un capteur de vitesse de rotation micromécanique (138).

13. Système de capteurs (110) selon l'une quelconque des revendications précédentes, dans lequel le capteur de position inductif (124) est un capteur de position de rotor inductif.

14. Système de capteurs (110) selon l'une quelconque des revendications précédentes, dans lequel le système de capteurs (110) présente au moins une roue codeuse (126) pouvant être reliée à l'élément (114) en rotation sur l'axe de rotation (112).

15. Procédé permettant de déterminer au moins une température et une propriété de rotation d'un élément (114) en rotation sur au moins un axe de rotation (112), le procédé comprenant l'utilisation d'au moins un système de capteurs (110) selon l'une quelconque des revendications précédentes, le procédé comprenant en outre les étapes suivantes consistant à :
- détecter au moins une grandeur mécanique de l'élément rotatif (114) par un dispositif (134) d'au moins un capteur inertiel (132), et détecter au moins une température de l'élément rotatif (114) par au moins un capteur de température (140) du capteur inertiel (132) ;
- générer au moins un premier signal (144) qui présente au moins une information relative à la température détectée, et au moins un deuxième signal (146) qui présente au moins une information relative à la grandeur mécanique détectée, par au moins une première unité d'évaluation (142) du capteur inertiel (132) ;
- détecter au moins une information relative à une propriété de rotation de l'élément rotatif (114) par au moins un capteur de position inductif (124) ;
- transmettre sans fil le premier signal (144) et le deuxième signal (146) par au moins une première interface (149) du capteur inertiel (132) au capteur de position inductif (124), et recevoir le premier signal (144) et le deuxième signal (146) par au moins une deuxième interface (180) du capteur de position inductif (124) ;
- transmettre le premier signal (144) et le deuxième signal (146) et la propriété de rotation détectée du capteur de position inductif (124) à au moins une deuxième unité d'évaluation (139) du système de capteurs (110), et évaluer l'information relative à la propriété de rotation détectée et le premier signal (144) et le deuxième signal (146), et établir la propriété de rotation et la température de l'élément rotatif (110).
